# EUROPÄISCHE PATENTSCHRIFT

(11) **EP 0 678 949 B1**
(45) Veröffentlichungstag und Bekanntmachung des Hinweises auf die Patenterteilung: **02.12.1998**
(21) Anmeldenummer: 95104291.0
(22) Anmeldetag: 23.03.1995
(51) Int. Cl.: H02B 1/32

(54) **Schaltschrank für elektrische Anlagen**
Switchgear cabinet for electrical installations
Armoire de commutation pour installations électriques

(30) Priorität: 18.04.1994 DE 4413353
(43) Veröffentlichungstag der Anmeldung: 25.10.1995
(73) Patentinhaber: ELEK GMBH, D-41470 Neuss (DE)
(72) Erfinder: Günther, Wolfgang, D-51373 Leverkusen (DE)
(74) Vertreter: Palgen, Peter, Dr. Dipl.-Phys.

(56) Entgegenhaltungen:
- BE-A- 1 001 799
- CH-A- 403 003
- CH-A- 571 659
- DE-A- 2 944 372
- DE-C- 4 041 950
- DE-U- 8 432 766
- DE-U- 8 511 217
- DE-U- 8 528 201
- DE-U- 8 707 084
- DE-U- 8 802 893
- DE-U- 8 802 894
- DE-U- 8 910 310
- DE-U- 9 110 389
- GB-A- 978 527
- US-A- 3 321 672
- US-A- 3 967 049
- ELEKTROTECHNIK, Bd. 69, Nr. 6, 27.März 1987, WURTZBURG, Seiten 16-22, XP002018706 MANFRED G. SCHWARZER: "aus kunststoff bis 2m hoch"

## Beschreibung

Die Erfindung bezieht sich auf einen Schaltschrank der dem Oberbegriff des Anspruchs 1 entsprechenden Art.

Ein derartiger Schaltschrank ist aus dem deutschen Gebrauchsmuster G 84 32 766 U1 bekannt.

Er weist einen aus längs- und querverlaufenden C-Profilschienen zusammengesetzten Montagerahmen auf. Die Profilschienen sind mittels Verbindungswinkeln kraftschlüssig miteinander verbunden, in dem die Verbindungswinkel mit nach innen weisenden bolzenförmigen Vorprägungen versehen sind, über die die miteinander zu verbindenden Profilschienen mittels ihrer Lochraster formschlüssig fixiert werden. Die Verbindungswinkel sind als Stahlblech-Stanz- und Prägeteile hergestellt.

Hinsichtlich seiner Montierbarkeit und Stabilität ist dieser Schaltschrank verbesserungsfähig.

Ferner sind Schaltschränke dieser Art beispielsweise aus den Werbeprospekten "System-Planung" und "System-Technik" der Firma Elek GmbH bekannt.

Derartige Schaltschränke dienen bei Schaltanlagen dazu, Schaltgeräte und Schaltelemente, wie beispielsweise Schütze, Sicherungselemente oder dergleichen oder auch Anzeigeinstrumente, die beispielsweise den Betriebszustand nachgeschalteter Verbraucher charakterisieren, aufzunehmen und übersichtlich und gut zugänglich an einem im Schrankgehäuse aufgestellten und an diesem befestigten Geräteträger anordnen zu können.

An die technischen Ausführungen von Schaltschränken werden besondere Anforderungen gestellt. Wegen der Vielfalt möglicher Anwendungen müssen insbesondere die Geräteträger eine besonders große Variabilität aufweisen, um die für den individuellen Einsatzzweck erforderliche Gerätekonstellation optimal aufnehmen zu können. Gleichermaßen muß der Schaltschrank insgesamt eine möglichst große Stabilität aufweisen, da insbesondere durch eingebaute elektrische Geräte hohen Eigengewichts sowie durch von Hand zu betätigende Schaltelemente, die teilweise erhebliche Betätigungskräfte erfordern, die mechanischen Belastungen eines Schaltschranks erheblich sind.

Die Funktionssicherheit eines derartigen Schaltschranks wird neben der mechanischen Stabilität durch seine elektrische Sicherheit bestimmt. So ist es für den Schutz des Betriebspersonals einerseits wichtig, alle stromführenden Teile derart mit isolierenden Abdeckungen zu versehen, daß ein zufälliges Berühren unmöglich ist, andererseits alle Teile des Geräteträgers, die aus werkstofftechnischen Gründen aus Metall hergestellt sind, wirksam zu erden. Dabei sollte durch die Sicherheitsmaßnahmen die Variabilität des Schaltschranks nicht übermäßig eingeschränkt werden, d.h. die Berührungsschutzabdeckungen müssen sowohl variabel anzubringen, als auch schnell und einfach montier- und demontierbar sein.

Der Eingangs zitierte, vorbekannte Schaltschrank der Firma Elek umfaßt ein kastenförmiges Schrankgehäuse, in dessen Seitenteilen horizontal verlaufende Tragschienen angeordnet sind. Zwischen einander gegenüberliegenden Tragschienen und an diesen mittels angeschraubten Winkeln befestigt, erstrecken sich Quertraversen, auf welche mittels Adaptern vertikal verlaufende U-Profil-Gerätetragschienen aufgeschraubt sind. In die vordere Profilwandung ist ein sich entlang der Schienenlängsachse erstreckendes, regelmäßiges Lochraster eingearbeitet, wobei eine Abstandssequenz benachbarter Löcher gerade 12,5 - 12,5 - 25 - 25 mm ist. Dieses Lochraster dient der Anbringung von Aufbauten wie Montageplatten zur Halterung von Geräten oder Sammelschienen. Zwischen den 25 mm voneinander beabstandeten Löchern dieses Lochrasters sind jeweils zwei quer zur Längserstreckung der Gerätetragschiene verlaufende Öffnungen rechteckigen Querschnitts in die vordere Profilfläche eingearbeitet, welche der Aufnahme eines Abdeckhaubenhalters dienen. Ein Abdeckhaubenhalter umfaßt auf seiner der Gerätetragschiene zugewandten Seite zwei in die Öffnungen eingreifende Rastzungen, welche mit Hinterschneidungen versehen sind, die den zwischen den Öffnungen verbliebenen Steg hintergreifen. Auf der Vorderseite der Gerätetragschiene stützt sich der Abdeckhaubenhalter über zwei einander gegenüberliegende Stützschenkel ab, die mit einer Schmalseite auf der Gerätetragschiene aufliegen. An seinem der Abdeckhaube zugewandten Ende umfaßt der Abdeckhaubenhalter eine in einen Hohlraum mündende Bohrung, in welche eine sich durch die Abdeckhaube hindurch erstrekkende Schnellverschlußschraube einschiebbar ist. Die Schnellverschlußschraube umfaßt auf ihrer in die Bohrung einschiebbaren Länge zwei gegenüberliegende, quer zu ihrer Längserstreckung verlaufende Hinterschneidungen, in welche nach vollständigem Einschieben der Schraube an dem Abdeckhaubenhalter angeformte Sperrglieder, die schräg zum spitz zulaufenden Schraubenende hin geneigt sind, eingreifen.

Ein vollständiger, in einen Schaltschrank eingebauter Geräteträger besteht aus zwei seine seitlichen Begrenzungen bildenden Gerätetragschienen der beschriebenen Art, welche - wie bereits erwähnt - auf den Quertraversen angebracht sind. Meist sind jedoch parallel zu diesen äußeren Gerätetragschienen weitere, weiter innen liegende Gerätetragschienen vorgesehen, deren Abstand zueinander sich nach den zu montierenden Schaltelementen richtet. Diese inneren Gerätetragschienen sind bei der bekannten Ausführungsform als Doppelschienen ausgebildet, d.h. es findet hier ein breiteres U-Profil Verwendung, welches die Einarbeitung von zwei Loch- bzw. Öffnungsraster nebeneinander zuläßt. Diese Ausgestaltung der inneren Tragschienen ist notwendig, um aneinandergrenzende Einzelgeräte montieren zu können.

Zwar wird bei dieser technischen Ausführung des Schaltschranks, des Berührungsschutz-Abdeckplattensystems sowie des Befestigungssystems für die Abdeckplatten eine schnelle und auch recht variable Montagefähigkeit von Schaltelementen und Abdeckhauben erzielt, es hat sich jedoch gezeigt, daß ein derartig aufgebauter Schaltschrank für den Einsatz besonders schwerer bzw. hohe Betätigungskräfte erfordernder Schalteinheiten nicht optimal geeignet ist. Auch sind der Geräteträger hinsichtlich seiner Variabilität und das Berührungsschutzabdecksystem hinsichtlich der Sicherheit der Befestigung insbesondere der Abdeckhaubenhalter auf den Gerätetragschienen verbesserungsfähig.

Aus dem DE-GM 89 10 310 U1 ist ein als Geräteträger dienendes Rahmengestell bekannt, dessen Variabilität durch Ausgestaltung der Traversen als Holme oder Streben erheblich erhöht ist. Als Streben sind in diesem Zusammenhang diejenigen Traversen zu verstehen, die an einer Befestigungsstelle an einer Seitenwandung einer zu ihr senkrecht verlaufenden Traverse - eines Holmes - enden. Die Holme und Streben sind als U-Profile ausgebildet, die sowohl in ihren Vorderflächen als auch in ihren Seitenflächen mit Rasterlochungen versehen sind. Zur Verbindung der Holme und der Streben dient je Befestigungsstelle ein wannenförmiger Trägerbaustein, der am Ende einer Strebe in das U-Profil eingeschoben und mit einer durch eine Lochung des Lochrasters in den Trägerbaustein eingreifenden gewindeformenden Schraube an der Strebe befestigt ist. Zur Festlegung an dem entsprechenden Holm ist eine weitere, den die Stirnseite der Strebe bildenden Boden des wannenförmigen Trägerbausteins durchsetzende Schraube vorgesehen, welche gewindeformend in eine seitliche Lochung des Holms eingreift.

Nachteilig ist bei diesem Geräteträger, daß er durch schlecht zugängliche Schrauben schwer montierbar und durch die Vielzahl enger Lochraster erheblich geschwächt ist. Es ist daher die Aufgabe der Erfindung, einen Schaltschrank zu entwickeln, welcher über einen Geräteträger verfügt, der eine vergleichbare Variabilität im Einbau von Schaltelementen oder dergleichen zuläßt, dessen mechanische Stabilität zur Aufnahme von schweren oder hohe Betätigungskräfte erfordernden Schaltgeräte jedoch verbessert ist und welcher eine elektrische Verbindung aller leitfähigen Geräteträgerkomponenten zur wirkungsvollen Erdung sicherstellt. Weiterhin sollen die Komponenten des Schaltschranks einfach und preisgünstig herzustellen und insbesondere vor Ort schnell und sicher zu montieren sein. Dabei soll besonderes Augenmerk auf die Eindeutigkeit der Montierweise gelegt werden. Es ist weiterhin Aufgabe der Erfindung, einen Schaltschrank mit Berührungsschutz-Abdecksystem sowie einem Befestigungssystem für dieses in dem Schaltschrank zu entwickeln, bei welchem der erhöhten Belastbarkeit des Geräteträgers und dessen höheren Sicherheitsstandard Rechnung getragen wird.

Diese Aufgabe wird durch den in Anspruch 1 wiedergegebenen Schaltschrank gelöst.

Dadurch, daß die als Holme oder als Streben ausgebildeten, u-profilförmigen Traversen des Geräteträgers mit Hilfe von Verbindungselementen, die Befestigungsschenkel umfassen, welche von der offenen Seite der Profile in diese einschiebbar sind aneinander befestigt sind, wird eine erhebliche Erhöhung der Stabilität des Geräteträgers erzielt. Zur variablen Montage der Verbindungselemente ist lediglich ein Lochraster pro Traverse erforderlich. Die gewünschte Variabilität des Geräteträgers wird daher erzielt, ohne daß eine starke Schwächung der Geräteträger durch eine Mehrzahl von Rasterlochungen erfolgt. Insbesondere können die als durchgehende Holme ausgebildeten Traversen hohe Querkräfte aufnehmen, da durch den seitlichen Ansatz der als Streben ausgebildeten Traversen die auf einen Holm einwirkenden Querkräfte auf einen weiteren bzw. mehrere zu ihm parallel verlaufende Holme verteilt werden. Durch die in Richtung der Längserstreckung der Holme variable, nachträgliche Montierbarkeit der Verbindungselemente können in besonders stark mechanisch belasteten Bereichen des Geräteträgers auf einfache Weise zusätzliche Streben eingesetzt werden, ohne daß es dabei eines sonstigen Umbaus des Geräteträgers bedarf. Durch einen derartigen Einbau zusätzlicher Tragschienen wird der Einbauraum der Geräteträger nicht beeinträchtigt. Auch wirkt es sich grundsätzlich auf die Stabilität des Schaltschranks positiv aus, daß die den Geräteträger bildenden Traversen in einer Ebene liegen, da nunmehr einzubauende Geräte problemlos an beiden festgelegt werden können, so daß durch den Geräteeinbau selbst ein zusätzlich stabilisierender Effekt erzielt wird.

Durch die erfindungsgemäße Ausgestaltung ist nicht nur problemlos eine einmal montierte Strebe in ihre Lage relativ zur Längserstreckung der sie einfassenden Holme zu verändern, sondern es können auch bei Bedarf - z.B. wenn die Stabilität des Geräterahmens für ein besonders schweres oder schwergängiges Schaltelement nicht ausreicht - zusätzliche Streben in den ansonsten bereits fertigmontierten Geräteträger eingesetzt werden.

Um Herstellungs- und Lagerkosten besonders niedrig zu halten, ist es vorteilhaft, gemäß Anspruch 2 alle Traversen aus demselben Profil herzustellen.

Zur zusätzlichen Befestigung von Schaltelementen und anderen Aufbauten ist es vorteilhaft, das Lochraster regelmäßig in der Vorderseite des Profils einzuarbeiten (Anspruch 3). Für die Übersichtlichkeit des Lochrasters ist es von Vorteil, wenn der Abstand benachbarter Lochungen des Lochrasters abwechselnd dem Einfachen und dem Doppelten Rastermaßes entspricht (Anspruch 4). Durch diese Ausgestaltung kann vermieden werden, daß Streben aus Versehen schräg in den Geräteträger eingebaut werden.

Diese Ausgestaltung des Lochrasters ist insbesondere in Verbindung mit der Ausgestaltung der Verbindungselemente nach Anspruch 5 vorteilhaft. Denn dadurch, daß der Abstand der Gewindebohrungen der ersten Befestigungsschenkel dem Doppelten des Rasermaßes entspricht, sind die Verbindungselemente lediglich in einer wohldefinierten Lage montierbar, so daß die betrachtete Traverse an dieser Befestigungsstelle zwangsläufig als Holm wirkt. Durch den dem Doppelten des Rastermaßes entsprechenden Abstand zwischen den beiden Gewindebohrungen bleibt zwischen den Befestigungsschrauben auf dem Holm ausreichend Platz zur Anbringung weiterer Aufbauten.

Eine weitere vorteilhafte Ausgestaltung der Verbindungselemente ist Gegenstand des Anspruchs 6. Durch diese Ausgestaltung lassen sich mit Hilfe eines Verbindungselements zwei parallel zueinander verlaufende, dicht benachbarte, im Sinne der Erfindung als Streben an einer als Holm wirkenden Traverse verankern. Eine derartige Doppelstrebe wird bevorzugt überall dort Verwendung finden, wo zwei verschiedene, Geräte bzw. Abdeckhauben aneinandergrenzen.

Durch die Ausgestaltung der Verbindungselemente gemäß den Ansprüchen 7 bis 9 wird der Kraftschluß zwischen den Traversen und dem Verbindungselement weiter verbessert. Eine derartige Ausgestaltung der Verbindungselemente setzt jedoch sehr geringe Fertigungstoleranzen voraus.

Durch die Ausgestaltung der Verbindungselemente gemäß Anspruch 10 wird erzielt, daß zwischen den beiden eine Doppelstrebe bildenden Traversen ein Zwischenraum von etwa 3 mm verbleibt, in welchen z.B. eine isolierende Schottwand eingeschoben werden kann.

Die mechanische Stabilität des gesamten Schaltschranks hängt wesentlich von der Art der Befestigung des Geräteträgers in dem Schrankgehäuse ab. In dieser Hinsicht hat es sich als besonders vorteilhaft erwiesen, wenn gemäß Anspruch 11 zumindest jeweils zwei voneinander beabstandete, an zwei gegenüberliegenden, jeweils einer Schrankgehäusewandung benachbarten Traversen vorgesehene Verbindungselemente Montageschenkel umfassen, die mit dem Schrankgehäuse zusammenwirken. Durch diese Ausgestaltung ist sichergestellt , daß an den Befestigungsstellen ein direkter Kraftschluß sowohl zwischen den Holmen und dem Schrankgehäuse als auch zwischen diesen und den Streben besteht, wodurch auf die Traversen wirkende Querkräfte minimiert werden. Besonders vorteilhaft ist es in diesem Zusammenhang, wenn die Montageschenkel zumindest an denjenigen Verbindungselementen vorgesehen sind, welche die den oberen bzw. den unteren Abschluß des Geräteträgers bildenden, als Streben wirkenden Traversen mit den die seitlichen Begrenzungen des Geräteträgers bildenden, als Holme wirkenden Traversen miteinander verbinden (Anspruch 12). Je nach Bedarf können selbstverständlich Montageschenkel an weiteren, dazwischenliegenden Verbindungselementen vorgesehen sein. Die Stabilität des Geräteträgers wird dadurch weiterhin erhöht.

Besonders vorteilhafte Ausgestaltungen der Montageschenkel und des Schrankgehäuses hinsichtlich der Montierfähigkeit eines Geräteträgers in einem Schrankgehäuse sind Gegenstand der Ansprüche 13 und 14. Wenn die Tiefentragschienen gemäß Anspruch 15 zusätzlich ein regelmäßiges Lochraster umfassen, ist zusätzlich auf einfache Weise ein tiefenvariabler Einbau des Geräteträgers möglich. Zur Vereinheitlichung beträgt dabei der Abstand benachbarter Lochungen des Lochrasters gemäß Anspruch 16 gerade dem einfachen Rastermaß.

Ein besonders sicherer Sitz des Geräteträgers in dem Schrankgehäuse wird erzielt, wenn jeder Montageschenkel auf seiner der Tiefentragschiene zugewandten Seite mehrere angeformte, entsprechend dem Rastermaß oder einem Vielfachen davon beabstandete Führungsbutzen umfaßt, welche mit den Lochungen des Lochrasters zusammenwirken.

Besonders vorteilhaft ist es, wenn jeder Montageschenkel gerade zwei Führungsbutzen umfaßt, deren Abstand gerade dem doppelten Abstand benachbarter Lochungen des Lochrasters entspricht und in der Mitte zwischen den Butzen in den Montageschenkeln eine Gewindebohrung eingearbeitet ist (Anspruch 18). Die Festlegung eines Verbindungselements an einer Tiefentragschiene kann dann auf einfache Weise dadurch erfolgen, daß durch die entsprechende Lochung der Tiefentragschiene eine Befestigungsschraube in die Gewindebohrung eingedreht wird.

Besonders vorteilhaft ist es, gemäß Anspruch 19 die Traversen und Verbindungselemente aus elektrisch leitenden Werkstoffen herzustellen, da somit eine elektrisch leitende Verbindung aller Geräteträgerteile untereinander gewährleistet ist. Erdungsprobleme werden dadurch wirksam ausgeschlossen. Unter elektrisch leitenden Werkstoffen sind in erster Linie metallische Werkstoffe zu verstehen. Es ist jedoch auch denkbar, Traversen und/oder Verbindungselemente aus z.B. durch Zugabe von Kohlefaser elektrisch leitenden Kunststoffen herzustellen.

Der Einsatz von Schottwänden, welche sich gegebenenfalls auch durch den Zwischenraum einer Doppelstrebe hindurcherstrecken und damit gleichsam den Raum vor und hinter dem Geräteträger unterteilen können, wird erleichtert, wenn gemäß Anspruch 20 die seitlichen Profilwandungen der Traversen in Längsrichtung Lochreihen aufweisen. Durch mit diesen Lochreihen zusammenwirkende Befestigungsglieder lassen sich die gegebenenfalls entsprechend gelochten Schottwände auf einfache Weise verankern.

Bei einer bevorzugten Ausführungsform des erfindungsgemäßen Schaltschranks gemäß Anspruch 21 sind zumindest die vertikalen Traversen bei ihrer Herstellung an einem Ende mit einer Markierung versehen worden, so daß nach der Herstellung ersichtlich ist, in welcher Lage sich die Traversen relativ zum Herstellungswerkzeug während ihrer Bearbeitung befanden. Durch diese Markierungen lassen sich die Traversen derart einbauen, daß eventuelle Toleranzen - z.B. in der Positionierung der Lochraster zueinander oder ihrer Positionierung auf den Traversen - durch den Einbau der Traversen in entsprechender Richtung abgeglichen werden können.

Ein mit einem verbesserten Berührungsschutz-Abdecksystem ausgestatteter erfindungsgemäßer Schaltschrank ist Gegenstand des Anspruchs 22.

Bei diesem Berührungsschutz-Abdecksystem umfassen die Schnellverschlußschrauben, welche in Schraubensitzen ruhen, die in den eigentlichen Berührungsschutz bildende Abdeckhauben eingearbeitet sind, jeweils eine ihren Köpfen vorgelagerte, nachgiebige Anlagefläche, mit welcher sich die jeweilige Schnellverschlußschraube an der Abdeckhaube abstützt. Durch diese Ausgestaltung steht die montierte Schnellverschlußschraube ständig unter einer Zugspannung, so daß die Abdeckhaube gegen den darunter befindlichen Abdeckhaubenhalter gepreßt wird. Einerseits wird durch diese Ausgestaltung zuverlässig ein "Spiel" der Abdeckhauben auf den Abdeckhaubenhaltern, wie es bislang insbesondere durch Fertigungstoleranzen immer wieder auftrat, zuverlässig verhindert, andererseits wird wirkungsvoll unterbunden, daß sich die Schnellverschlußschrauben beim Transport eines bereits montierten Berührungsschutz-Abdecksystems losrütteln.

Besonders einfach und wirkungsvoll ist die nachgiebige Anlagefläche herstellbar, wenn sie gemäß Anspruch 23 durch einen scheibenartigen, kreis- oder kreissegmentförmigen Umfangsbund ausgebildet ist, welcher zu dem Kopf beabstandet an dem Schaft der Schnellverschlußschraube angeformt ist und dessen Außendurchmesser kleiner oder gleich demjenigen des Kopfes ist. Bei dieser Ausgestaltung läßt sich der gewünschte Anpreßdruck der Abdeckhauben auf einen Abdeckhaubenhalter durch die Stärke und/oder durch die flächenmäßige Ausgestaltung des Umfangsbundes einstellen. Wenn der Außendurchmesser des kreis- oder kreissegmentförmigen Umfangsbundes gerade demjenigen des Kopfes der Schnellverschlußschraube entspricht, kann der Umfangsbund gleichzeitig Führungszwecken der Schraube in dem Sitz der Abdeckhaube dienen.

Eine vorteilhafte Ausgestaltung der am Schaft der Schraube angeformten Eingreifmittel, die wahlweise mit einem Abdeckhaubenhalter in Eingriff bringbar sind, und der zu diesen Eingreifmitteln passende Abdeckhaubenhalter ist Gegenstand des Anspruch 24. Durch diese Ausgestaltung läßt sich die Schnellverschlußschraube durch eine 90° Drehung mit dem entsprechenden Abdeckhaubenhalter verriegeln, nachdem entgegen der durch die nachgiebige Anlagefläche erzeugte axiale Kraftkomponente die Schnellverschlußschraube so weit in axialer Richtung verschoben wurde, daß an der Schnellverschlußschraube vorgesehene radiale Fortsätze hinter an dem Abdeckhaubenhalter vorgesehene Abstützflächen verlagerbar sind.

In Erweiterung dieser Ausführungsform können die Fortsätze als Gewindesegmente ausgebildet sein, so daß die Schnellverschlußschraube bei der dem Arretieren dienenden 90°-Drehung einen Hub entlang ihrer Längsachse vollzieht, so daß sich ihre freie Schaftlänge bei der Drehung verkürzt (Anspruch 25). Bei dieser Ausgestaltung können die radialen Fortsätze gerade so angeordnet sein, daß diese zunächst ohne Verformung der flexiblen Anlagefläche hinter die an den Abdeckhaubenhaltern vorgesehenen Abstützflächen verlagerbar sind. Durch den anschließenden axialen Hub wird die nachgiebige Anlagefläche der Schnellbefestigungsschraube gegen die Abdeckhaube gezogen und zu einem gewissen Grad elastisch verformt, wodurch sie stets unter Spannung steht. Versuche haben gezeigt, daß hinsichtlich der möglichen Fertigungstoleranzen, des Anpreßdrucks sowie des für die 90°-Drehung erforderlichen Drehmoments bei einem Ausführungsbeispiel eine Ausgestaltung der Gewindesegmente optimal ist, welche zu einem Hub von etwa 1,5 mm führt (Anspruch 26). Bei anderen Ausführungsbeispielen können auch Ausgestaltungen der Gewindesegmente vorteilhaft sein, die zu einem anderen Hub der Befestigungsschraube führen, wobei dieser allgemein zwischen 1 mm und 2 mm liegt.

Bei dieser Ausführungsform der Schnellverschlußschrauben führt die durch die nachgiebige Anlagefläche erzeugte Zugspannung dazu, daß durch die Gewindesegmente ein im Lösungsdrehsinn wirkendes Drehmoment auf die in ihrer "Arretiert"-Stellung befindlichen Schraube übertragen wird. Zwar wird normalerweise bereits durch die Reibung, die die nachgiebige Anlagefläche und die Gewindefortsätze selbst erzeugen ein selbstätiges Lösen der Schnellverschlußschraube unterbunden, jedoch kann es gemäß Anspruch 27 vorteilhaft sein, an dem Abdeckhaubenhalter Einschnappzungen vorzusehen, welche in der "Arretiert"-Stellung der Schnellverschlußschraube in an dieser vorgesehene Hinterschneidungen, die sich etwa parallel zur Längsachse der Schnellverschlußschraube erstrecken, einrasten.

Vorteilhaft ist es weiterhin, gemäß Anspruch 28 im Befestigungsdrehsinn gesehen hinter den Hinterschneidungen Vorsprünge an der Schnellverschlußschraube anzuformen, welche in der "Arretiert"-Stellung an den Einschnappzungen anschlagen. Durch diese Ausgestaltung wird die Arretiert-Stellung der Schraube exakt definiert und zuverlässig verhindert, daß eine Schnellbefestigungsschraube nicht in ausreichendem Maße angezogen oder über die "Arretiert"-Stellung hinausgedreht wird.

Besonders vorteilhafte Ausgestaltungen der Abdeckhaubenhalter sowie der Abdeckhauben sind Gegenstand der Ansprüche 29 bis 32. Durch diese Ausgestaltung des Berührungsschutz-Abdecksystems wird erreicht, daß die Abdeckhauben relativ zum Geräteträger präzise in einer vorbestimmten Position befestigt werden können. Des weiteren ragen die Schraubenköpfe nicht aus der äußeren Oberfläche der Abdeckhauben vor und diese lassen sich wahlweise in zwei um 180° versetzten Lagen gleichermaßen einfach montieren, wobei die im ersten Falle die Vorderseite bildende Wandung der Abdeckhaube im zweiten Falle deren Rückseite bildet.

Die Schnellverschlußschrauben weisen vorteilhafterweise die Merkmale des Anspruchs 33 auf, da einerseits der Flächeninhalt der radialen Anlagenflächen hierdurch verkleinert und damit die Gefahr eines durch Fertigungstoleranzen bedingten Klemmens der Schraube in ihrem Sitz verhindert wird. Außerdem ist in Zusammenspiel mit den Merkmalen des Anspruchs 34 eine einmal in eine Abdeckhaube eingesetzte Schnellverschlußschraube praktisch unverlierbar, da diese ohne erhebliche äußere Krafteinwirkung nicht aus ihrem Schraubensitz herausgeschoben werden kann.

Eine Ausführungsform des Berührungsschutz-Abddecksystems, bei welchem die Schnellverschlußschraube besonders exakt von dem Abdeckhaubenhalter geführt wird, weist die Merkmale des Anspruchs 35 auf.

Zum Ansatz eines Werkzeugs muß der Schraubenkopf mit einer entsprechenden Einrichtung versehen sein. Besonders vorteilhaft ist es, wenn gemäß Anspruch 36 diese Einrichtung aus einem sogenannten Pozi-Drive besteht, da das über den Pozi-Drive aufbringbare Anzugsdrehmoment begrenzbar ist und damit ein zu festes Anziehen, was unter Umständen eine Zerstörung der Einschnappzungen zur Folge hätte, verhindert wird. Es ist jedoch auch möglich, die Befestigungsschraube mit einem allgemein einsetzbaren Kreuzschlitz auszustatten.

Besonders gegen unsachgemäße Behandlung oder Manipulationen geschützt sind die in einem Schaltschrank montierten Geräte dann, wenn die Stirnseite des Schraubenkopfes der Schnellverschlußschraube mit einem einfachen Schlitz ausgestattet ist, in welchen nach der Montage der Abdeckhaube ein Verriegelungsfortsatz einer Plombierungskappe einschiebbar ist, welche an der Abdeckhaube mittels einer Plombe gesichert werden kann (Anspruch 37).

Ein für die Montage des Berührungsschutz-Abdecksystems in einem erfindungsgemäßen Schaltschrank geeignetes Befestigungssystem ist Gegenstand des Anspruchs 38.

Bei dem Befestigungssystem sind die Abdeckhaubenhalter als Tandemhalter ausgebildet, die zur Befestigung zweier aneinandergrenzender Abdeckhauben vorgesehener sind. Sie stützen sich mit einer Anlagewandung flächig auf dem Geräteträger des Schaltschranks ab. In Verbindung mit zwei Abstand voneinander aufweisenden, von der Anlagewandung vorspringenden Führungszapfen, welche mit in dem Geräteträger vorgesehenen Befestigungslöchern eine Passung bilden, läßt sich ein Abdeckhaubenhalter durch einfaches Einstecken an dem Geräteträger insoweit befestigen, als daß der unbelastete Abdeckhaubenhalter sich nicht selbstätig löst. Festlegbar ist der Abdeckhaubenhalter mit einem zwischen den Führungszapfen vorgesehenen Verriegelungsglied, welches mit dem Geräteträger wahlweise in Eingriff bringbar ist. Durch diese Ausgestaltung des Abdeckhaubenhalters wird ein sicherer Sitz auf dem Geräteträger bei gleichzeitiger einhand-montier/demontierfähigkeit erzielt.

Als besonders vorteilhaft hat es sich erwiesen, wenn ein Abdeckhaubenhalter gerade zwei zu seiner Mittelachse symmetrisch angeordnete Zapfen umfaßt, deren Abstand wiederum gerade dem einheitlichen Rastermaß entspricht (Anspruch 39).

Es ist dann gemäß Anspruch 40 besonders von Vorteil, die in den Geräteträger eingearbeitete regelmäßige Anordnung von Befestigungslöchern als Lochreihen auszubilden, wobei der Abstand benachbarter Löcher gerade dem halben Rastermaß entspricht. Die Löcher können dann - je nach Bedarf - sowohl der Aufnahme der Führungszapfen als auch dem Zusammenwirken mit dem Befestigungsglied dienen. Dadurch kann die Positionierung eines Abdeckhaubenhalters in Schritten erfolgen, die dem halben Rastermaß entsprechen.

Um Fehlmontagen von Abdeckhaubenhaltern auf dem Geräteträger zu vermeiden, ist es vorteilhaft, gemäß Anspruch 41 die Löcher der Lochreihe mit einem kleineren Durchmesser auszustatten als die Lochungen des ersten Lochrasters, welches bekanntermaßen der Montage von Verbindungselementen oder Aufbauten dient.

Als preisgünstig herstellbares und einfach zu befestigendes Verriegelungsglied findet vorzugsweise gemäß Anspruch 42 eine Schraube Verwendung, welche in einer in der Mitte zwischen den Zapfen angeordneten Querausnehmung des Abdeckhaubenhalters ruht. Dabei muß dafür Sorge getragen sein, daß die Längsachse einer vollständig in die Querausnehmung eingeschobenen Befestigungsschraube mit der Mittelachse des Abdeckhaubenhalters zusammenfällt.

Besonders vorteilhaft ist es in diesem Zusammenhang, gemäß Anspruch 43 in der Querausnehmung flexible Zungen vorzusehen, welche die Befestigungsschraube hintergreifen. Die Befestigungsschraube ist dann vormontierbar und kann beim Transport eines noch nicht montierten Abdeckhaubenhalters nicht verloren gehen.

In der Zeichnung ist ein Ausführunggsbeispiel der Erfindung schematisch illustriert.

Es zeigen:
Fig. 1 einen erfindungsgemäßen Schaltschrank im Gesamtüberblick in perspektivischer Darstellung;
Fig. 2 - ausschnittsweise - einen Geräteträger des erfindungsgemäßen Schaltschranks mit an diesem befestigbaren Abdeckhaubenhaltern zur Montage der - ebenfalls ausschnittsweise dargestellten - Abdeckhauben inklusive einer hierzu geeigneten Schnellverschlußschraube;
Fig. 3 ein Verbindungselement in einer Vorderansicht (Ansicht A gemäß Fig. 4);
Fig. 4 dasselbe Verbindungselement in einer Seitenansicht (Ansicht B gemäß Fig. 3);
Fig. 5 ein Verbindungselement mit angeformtem Montageschenkel in einer Vorderansicht (Ansicht C in Fig. 6);
Fig. 6 eine Seitenansicht desselben Verbindungselements mit angeformtem Montageschenkel (Ansicht D in Fig. 5);
Fig. 7 die Vorderansicht eines die Holme bzw. Streben des Geräteträgers bildenden U-Profiles (Ansicht E in Fig. 8);
Fig. 8 dasselbe U-Profil in einer Seitenansicht (Ansicht F in Fig. 7),
Fig. 9 einen Schnitt durch eine Abdeckhaube gemäß der Schnittebene IX-IX in Fig. 1;
Fig. 10 einen Längsschnitt durch einen Schraubensitz einer Abdeckhaube;
Fig. 11 einen Abdeckhaubenhalter in perspektivischer Darstellung in einer Ansicht schräg von vorne;
Fig. 12 eine Schnellverschlußschraube in perspektivischer Darstellung in einer Ansicht gemäß Fig. 11;
Fig. 13 -ausschnittsweise- einen Abdeckhaubenhalter mit montierter Abdeckhaube in einer teilgeschnittenen Seitenansicht;
Fig. 14 einen Querschnitt durch einen Abdeckhaubenhalter mit eingeführter Schnellverschlußschraube gemäß Linie XIV-XIV in Fig. 13, wobei in der oberen Hälfte von Fig. 14 die Schnellverschlußschraube in der Stellung "gelöst", in der unteren Hälfte von Fig. 14 in der Stellung "arretiert" dargestellt ist, sowie
Fig. 15 dieselbe Darstellung des Abdeckhaubenhalters wie Fig. 14, wobei jedoch die obere Hälfte von Fig. 15 die Schnellverschlußschraube in einer Zwischenstellung zeigt.

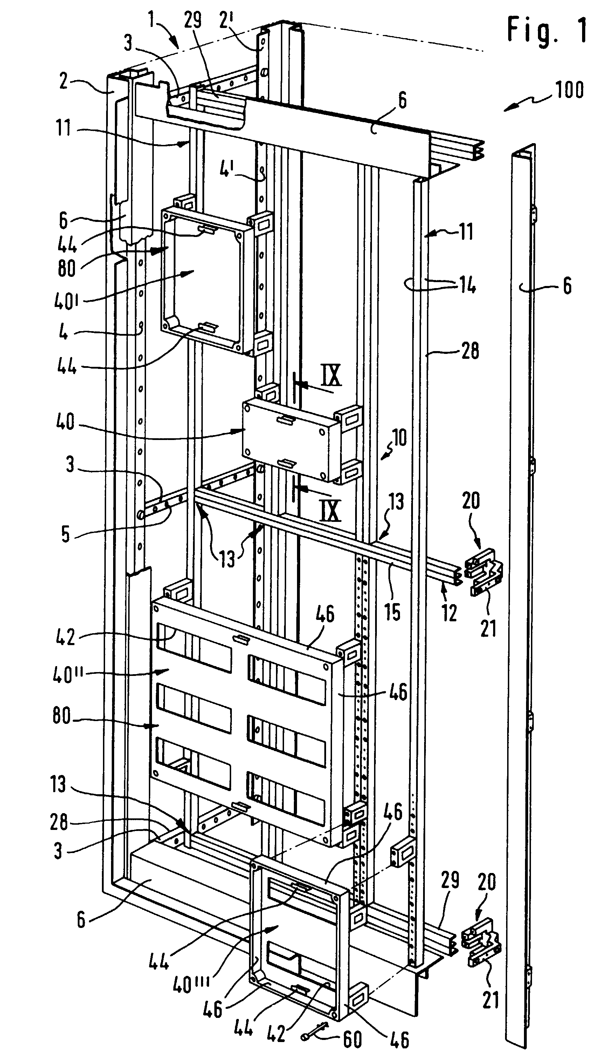

Wenn im Folgenden von "vorn" die Rede ist, so bezieht sich die Angabe auf die dem Betrachter zugewandte Seite des Schaltschranks gemäß der Frontansicht in Fig. 1. Die Angaben "links" und "rechts" beziehen sich auf den Betrachtersinn, die Angaben "oben" und "unten" beziehen sich auf einen Schaltschrank, welcher sich in seiner aufrechten Betriebsposition befindet.

Der in Fig. 1 als Ganzes mit 100 bezeichnete Schaltschrank umfaßt einen Profil-Gerüstrahmen 1, an dessen vertikalen Seitenprofilen 2,2' diejenigen einer Seite verbindende, horizontale Tiefentragschienen 3 angebracht sind. Mittels einem in den Seitenprofilen 2,2' vorgesehenen Lochrasters 4,4' können die Tiefentragschienen 3 höhenvariabel angeordnet werden. An den Tiefentragschienen 3, welche ebenfalls mit einem Lochraster 5 versehen sind, ist ein Geräteträger 10 mittels Montageschenkel 21 aufweisenden Verbindungselementen 20 befestigt. Durch das Lochraster 5 kann die Befestigung tiefenvariabel erfolgen.

Der Geräteträger 10 besteht aus senkrecht zueinander angeordneten Traversen 11,12, wobei mit 11 die vertikal verlaufenden, mit 12 die horizontal verlaufenden Traversen bezeichnet sind. Die Traversen 11,12 sind an Befestigungsstellen 13 in noch zu beschreibender Weise miteinander verbunden und stellen in Bezug auf diese entweder Holme 28 oder Streben 29 dar . Unter Holmen 28 sind in diesem Zusammenhang Traversen 11,12 zu verstehen, die im Bereich einer Befestigungsstelle mit einer Seitenwandung 14 an ein stirnseitiges Längsende 15 einer zu ihnen senkrecht verlaufenden Traverse 11,12, einer Strebe 29 angrenzen. Die Verbindung der Holme 28 und Streben 29 erfolgt dort, wo gleichzeitig die Befestigung des Geräteträgers 10 an den Tiefentragschienen 3 erfolgen soll, über Verbindungselemente 20 an die Montageschenkel 21 angeformt sind, ansonsten über Verbindungselemente 30, die nicht über einen Montageschenkel verfügen. Die Wirkungsweise und Ausgestaltung der Verbindungselemente 20 bzw. 30 wird im Folgenden noch genauer beschrieben werden.

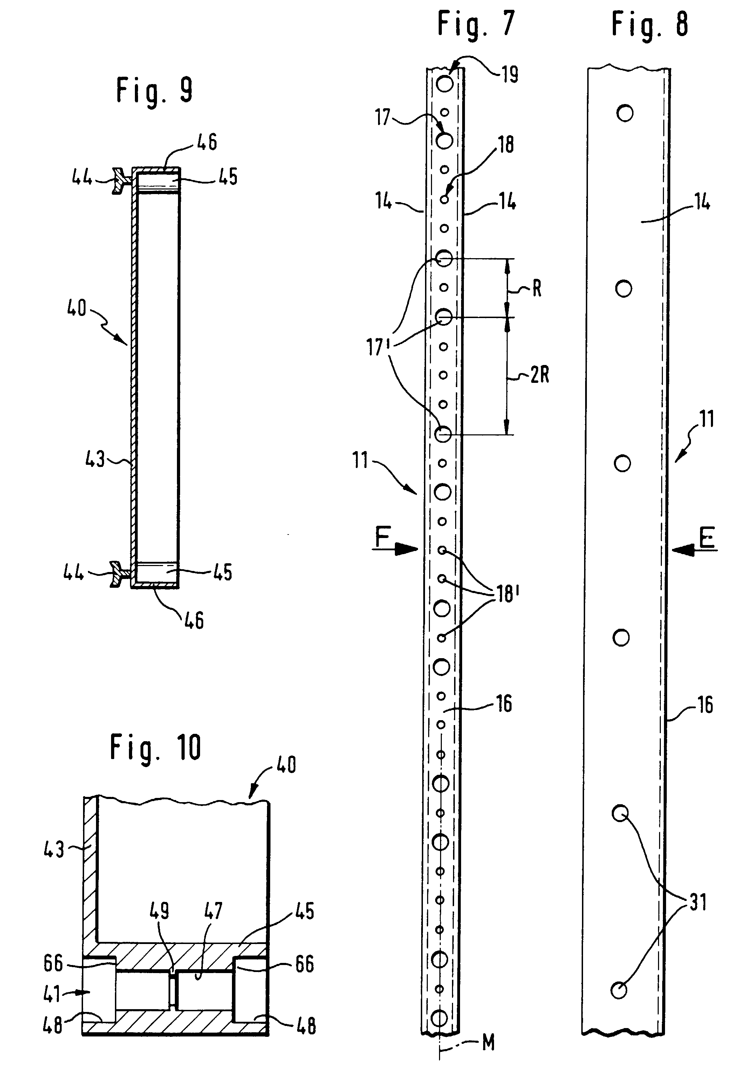

Die Vorderflächen 16 der Traversen 11,12 liegen in einer gemeinsamen Ebene und tragen ein im Einzelnen noch zu beschreibendes Lochraster 17,18. Der so ausgebildete Geräteträger 10 dient einerseits der Montage von - in der Zeichnung nicht dargestellten - Aufbauten wie Montageplatten, Sammelschienen und/oder elektrischen Schaltelementen, andererseits der Befestigung von Abdeckhauben 40, welche dem Schutz des Personals vor Berührung von stromführenden Komponenten der montierten Aufbauten dienen. Verschiedene Abdeckhauben 40,40',40",40"' sind beispielhaft in Fig. 1 dargestellt. Die Abdeckhauben 40.40',40",40"' ruhen auf Abdeckhaubenhaltern 50, welche mit ihrer Rückseite an den Vorderflächen 16 der Traversen 11,12 in noch zu beschreibender Weise befestigt sind. Die Montage der Abdeckhauben an den Abdeckhaubenhaltern erfolgt mit Hilfe von Schnellverschlußschrauben 60, die in in den Abdeckhauben 40,40',40",40"' eingearbeiteten Schraubensitzen 41 ruhen (s. auch Fig. 10). Ebenfalls dem Berührungsschutz dienen weitere Abschlußblenden 6, welche im vorderen Bereich des Profilgerüstrahmens 1 einen berührungssicheren Abschluß nach oben und unten sowie seitlich bilden.

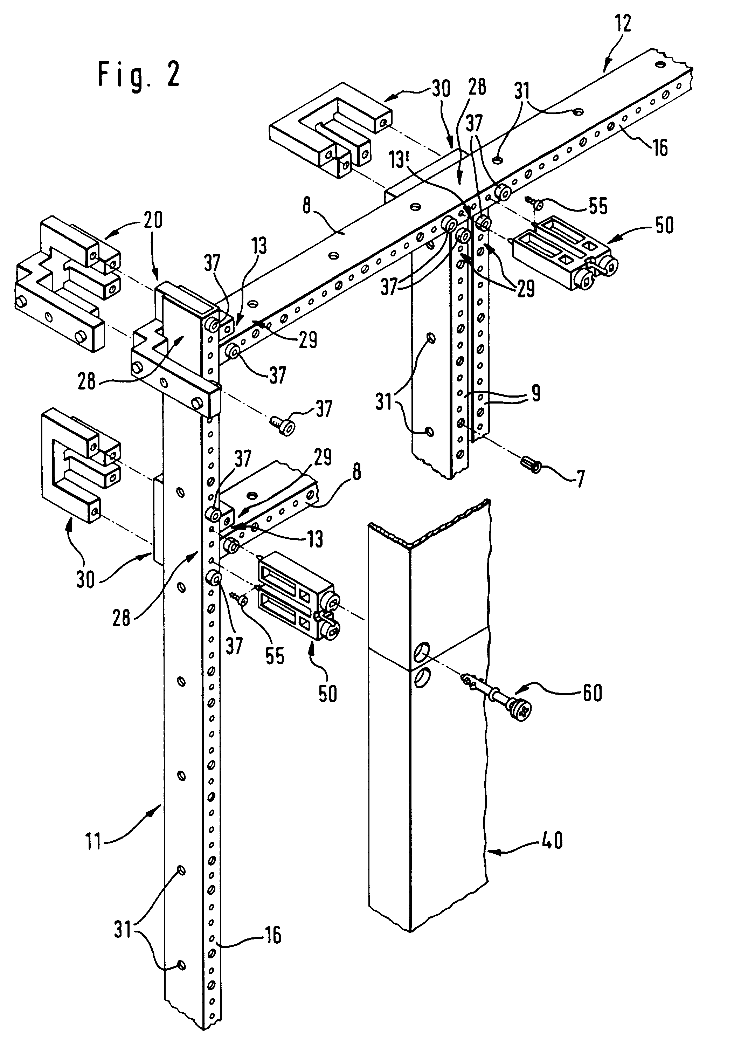

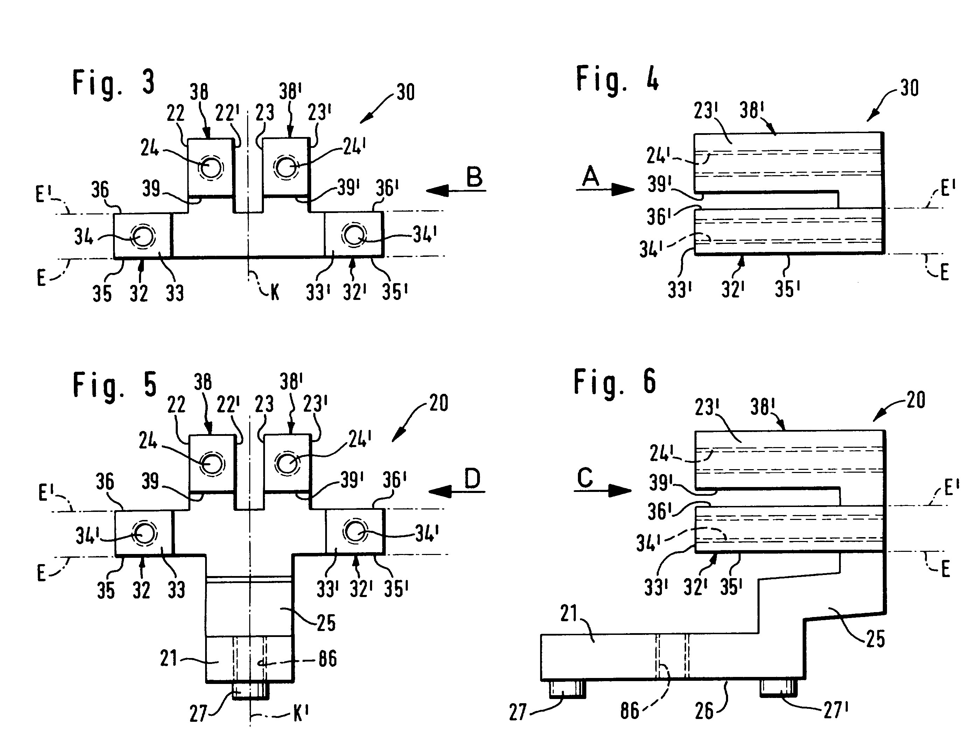

Der Aufbau des Geräteträgers 10 soll nun anhand der Fig. 2 bis 8 im Einzelnen erläutert werden. Als waagerecht bzw. senkrecht verlaufende Traversen 11 bzw. 12 dienen langgestreckte U-Profile, deren Seitenwandungen 14 etwa die doppelte Breite derjenigen ihrer der Vorderseite 16 aufweisen. Entlang der Mittellinie M der Vorderseite 16 der Traversen 11,12 ist in deren Vorderseite ein regelmäßiges Lochraster 17 eingearbeitet, wobei der Abstand benachbarter Lochungen 17' des Lochrasters 17 abwechselnd dem Einfachen und dem Doppelten des Rastermaßes R entspricht. Symmetrisch zu den Lochungen 17' des Lochrasters 17 ist eine weitere Lochreihe 18 in die Vorderseite 16 der Traversen 11,12 eingearbeitet. Dabei ist zwischen zwei mit dem Rastermaß R beabstandeten Lochungen 17' gerade ein Loch 18' vorgesehen, wogegen zwischen zwei um das Doppelte des Rastermaßes R beabstandeten Lochungen 17' gerade drei Löcher 18' eingearbeitet sind, so daß der Abstand zwischen den Löchern eines Lochpaares, welches entweder aus zwei Löchern 17' oder einem Loch 17' und einem Loch 18' besteht, jeweils dem Halben des Rastermaßes R entspricht. Die Lochungen 17', die einen größeren Durchmesser aufweisen als die Löcher 18', dienen der Befestigung von Verbindungselementen 20 bzw. 30, die für die Befestigung von den Traversen 11,12 aneinander vorgesehen sind und welche anhand der Fig. 3 bis 6 im einzelnen beschrieben werden sollen. Die Löcher 18' sind der Montage von Aufbauten vorbehalten. Durch den unterschiedlichen Lochdurchmesser ist gewährleistet, daß die Verbindung von den Traversen 11 und 12 lediglich in bestimmten (genormten) Abständen erfolgen kann. Die Montage von Aufbauten ist dagegen im Rahmen der aus Lochungen 17' und Löchern 18' bestehenden gesamten Lochreihe 19 uneingeschränkt möglich, da die Lochungen 17' durch Einsätze 7 auf den Durchmesser der Löcher 18' reduziert und damit ebenfalls zur Montage von Aufbauten herangezogen werden können.

Die Verbindung der senkrecht zueinander verlaufenden Traversen 11,12 miteinander erfolgt über Verbindungselemente 20 bzw. 30, deren Ausgestaltung im Folgenden anhand von Fig. 3 bis 6 erläutert werden soll. Die im Spritzgußverfahren aus einem metallischen Werkstoff hergestellten Verbindungselemente 30 umfassen zwei zueinander parallele, gleich lange, voneinander beabstandete erste Befestigungsschenkel 32,32', welche jeweils eine in ihre Stirnseite 33,33' eingearbeitete Gewindebohrung 34,34' umfassen. Die Länge der ersten Befestigungsschenkeln entspricht der Breite der Seitenflächen 14 der Traversen 11,12, der Abstand der Gewindebohrungen 34,34' entspricht dem Doppelten des Rastermaßes R. Die jeweils in einer Ebene E bzw. E' liegenden Seitenflächen 35,35' bzw. 36,36' bilden mit den Innenflächen der Profilseitenwandungen 14 Gleitpassungen, so daß sich die Verbindungselemente in die offene Profilseite der Traversen 11,12 einschieben und mittels in die entsprechenden Lochungen 17' eingeführter Befestigungsschrauben 37 verankern lassen. Da die Erstreckung der ersten Befestigungsschenkel 32,32' in Längsrichtung der Traversen größer ist als der Abstand der einander gegenüberliegenden Innenwandungen der Seitenwandungen 14 der Traversen 11,12, kann das Verbindungselement 20 bzw. 30 lediglich in dieser oder in einer zu dieser um 180° gedrehten Lage in eine Traverse 11,12 eingeschoben werden, so daß diese an der mit Hilfe des betrachteten Verbindungselements 20 bzw. 30 gebildeten Befestigungsstelle 13 im Sinne der Erfindung einen Holm 28 bildet.

Des weiteren umfassen die Verbindungselemente zwei zweite Befestigungsschenkel 38,38', welche symmetrisch zur Mittelebene K bzw. K' der Verbindungselemente 20 bzw. 30 angeordnet sind. Dabei weisen die zweiten Befestigungsschenkel 38,38' zu den ersten Befestigungsschenkeln 36,36' einen seitlichen Versatz auf, so daß der Abstand der durch die einander zugewandten Seiten 36,36' bzw. 39,39' der ersten und zweiten Befestigungsschenkel 32,32' bzw. 38,38' einen senkrechten Abstand aufweisen, welcher der Materialstärke der Seitenwandungen 14 der Traversen 11,12 entspricht. Die zu den Ebenen E bzw. E' senkrecht verlaufenden Seitenflächen 22 und 22' bzw. 23 und 23' der zweiten Befestigungsschenkel 38 bzw. 38' bilden mit den Innenwandungen der Seitenflächen 14 der Traversen 11,12 Gleitpassungen, so daß sich senkrecht zur ersten, als Holm 28 dienenden Traverse 11,12 zwei parallel zueinander verlaufende, der betrachtenden Befestigungsstelle 13 als Strebe 29 dienende Traversen 11,12 an den Befestigungsschenkeln 38,38' montieren lassen. Der Befestigung dient wiederum eine Befestigungsschraube 37, welche durch eine am stirnseitigen Ende 15 der Traverse 11,12 in der Vorderseite 16 vorgesehene Lochung 17' in eine entsprechende Gewindebohrung 24,24' der zweiten Befestigungsschenkel 38,38' einschraubbar ist. Die Länge der zweiten Befestigungsschenkel 38,38' entspricht derjenigen der ersten Befestigungsschenkel 32,32'. Der Abstand der beiden Gewindebohrungen 24 und 24' entspricht dem Rastermaß R.

Die mit Hilfe eines Verbindungselements 20 bzw. 30 an eine an dieser Befestigungsstelle 13 als Holm 28 dienende Traverse 11 oder 12 montierbare, als Strebe 29 dienende Traverse 11,12 kann als Einfachstrebe 8 ausgebildet sein. Diesbezügliche Befestigungsstellen sind in Fig. 2 mit 13 bezeichnet. In diesem Falle bleibt einer der Befestigungsschenkel 38,38' frei und es wird lediglich an dem Anderen in der beschriebenen Weise eine Traverse 11,12 montiert. Oder aber an beiden Befestigungsschenkeln 38,38' wird eine Traverse montiert, so daß sich eine in Fig. 2 mit 9 bezeichnete Doppelstrebe ergibt. Eine derartige Anordnung ist in Fig. 2 in Verbindung mit der Knotenstelle 13' dargestellt. Da die Vorderseite 16 des die Traversen 11,12 bildenden U-Profils eine Breite aufweist, die kleiner ist als die Hälfte des Rastermaßes R, ergibt sich zwischen denen eine Doppelstrebe 9 bildenden Profilen ein Zwischenraum, in welchen im Bedarfsfalle eine in der Zeichnung nicht dargestellte Schottwand einschiebbar ist. Der Befestigung derartiger Schottwände dient ein in die Seitenwandungen der Traversen 11,12 eingearbeitetes regelmäßiges Lochraster 31.

Der Verankerung des Geräteträgers 10 dienen Verbindungselemente 20, welche in ihrer Ausgestaltung und Wirkungsweise den Verbindungselementen 30 entsprechen, jedoch zusätzlich auf ihrer den zweiten Verbindungsschenkeln 38,38' gegenüberliegenden Seite einen angeformten Montageschenkel 21 umfassen. Ein derartiges Verbindungselement 20 ist in den Fig. 5 und 6 dargestellt. Der Montageschenkel 21 erstreckt sich parallel zu den ersten und zweiten Befestigungsschenkeln 32,32' bzw. 38,38' und symmetrisch zur Mittelebene K' des Verbindungselements 20. Er umfaßt einen doppelt winkligen Bereich 25, über welchen er an dem Teil des Verbindungselements 20 angeformt ist, welcher dem Verbindungselement 30 entspricht. Auf seiner seitlich von dem Geräteträger 10 fortweisenden Seite 26 sind an den Montageschenkeln 21 symmetrisch zur Mittelebene K' zwei Führungsbutzen 27,27' angeformt, welche in Richtung der Längserstreckung des Montageschenkels 21 um das Doppelte des Rastermaßes R beabstandet sind. In der Mitte zwischen den Führungsbutzen 27,27' ist eine Gewindebohrung 28 vorgesehen, in welche eine in der Zeichnung nicht dargestellte Befestigungsschraube eindrehbar ist.

Die Montage eines Befestigungselements 20 in dem Schaltschrank 100 erfolgt dadurch, daß es mit seinem Montageschenkel 21 in eine Tiefentragschiene 3 eingesetzt wird, wobei die Führungsbutzen 27,27' mit den entsprechenden Lochungen des Lochrasters 5 zusammenwirken. Durch die zwischen diesen Lochungen verbleibende weitere Lochung in der Tiefentragschiene wird eine Befestigungsschraube in die Gewindebohrung 28 eingedreht. Das Verbindungselement 20 ist somit verdrehsicher mit der Tiefentragschiene 3 verbindbar.

Wie bereits Eingangs kurz erläutert, dient der Geräteträger 10 gleichzeitig der Anbringung eines Berührungsschutzabdecksystems 80, welches dem Schutz vor Berührungen stromführender Teile des Schaltschranks bzw. der in ihm montierten Aufbauten und Schaltelemente durch das Bedienpersonal dient. Das Berührungsschutzabdecksystem umfaßt wannenartige, quaderförmige Abdeckhauben 40,40',40", 40"', deren Außenabmessungen den jeweiligen Anforderungen angepaßt sind (s. Fig. 1). Die Abdeckhauben können im Bedarfsfalle mit Öffnungen 42 ausgestattet sein, welche der Durchführung von Bedienungselementen und dergleichen von in dem Schaltschrank 100 montierten, in der Zeichnung nicht dargestellten elektrischen Schaltelementen dienen können. Wie in Fig. 1 am Beispiel der dargestellten Abdeckhauben 40,40',40",40"' ersichtlich, sind diese derart ausgebildet, daß sie sowohl mit der ihre Grundfläche bildenden Wandung 43 dem Geräteträger zugewandt (Abdeckhauben 40' und 40"' in Fig. 1), als auch zur Vorderseite des Schaltschranks 100 weisend montiert werden können (s. Abdeckhauben 40,40" in Fig. 1). Auf der jeweils der Vorderseite des Schaltschranks zugewandten Seite der Wandung 43 sind an den Abdeckhauben 40,40',40",40"' Griffelemente 44 angeformt, die der Erleichterung ihrer Handhabung dienen. Die wannenförmigen Abdeckhauben 40,40',40",40"' umfassen in ihrem Innenraum Versteifungsprofile 45, welche die aneinandergrenzenden Seitenwandungen 46 der Abdeckhauben miteinander verbinden. In die Versteifungsprofile 45 sind die Schraubensitze 41 eingearbeitet, welche jeweils der Aufnahme einer hinsichtlich ihrer Wirkungsweise noch zu beschreibenden Schnellverschlußschraube 60 dienen. Ein Schraubensitz 41 besteht aus einer senkrecht zur Wandung 43 verlaufenden Bohrung 47, an deren beiden Enden zylindrische Erweiterungen 48 vorgesehen sind. In der Mitte der Schraubensitze 41 ist eine wulstförmige Umfangsreduzierung 49 vorgesehen (s. Fig. 10).

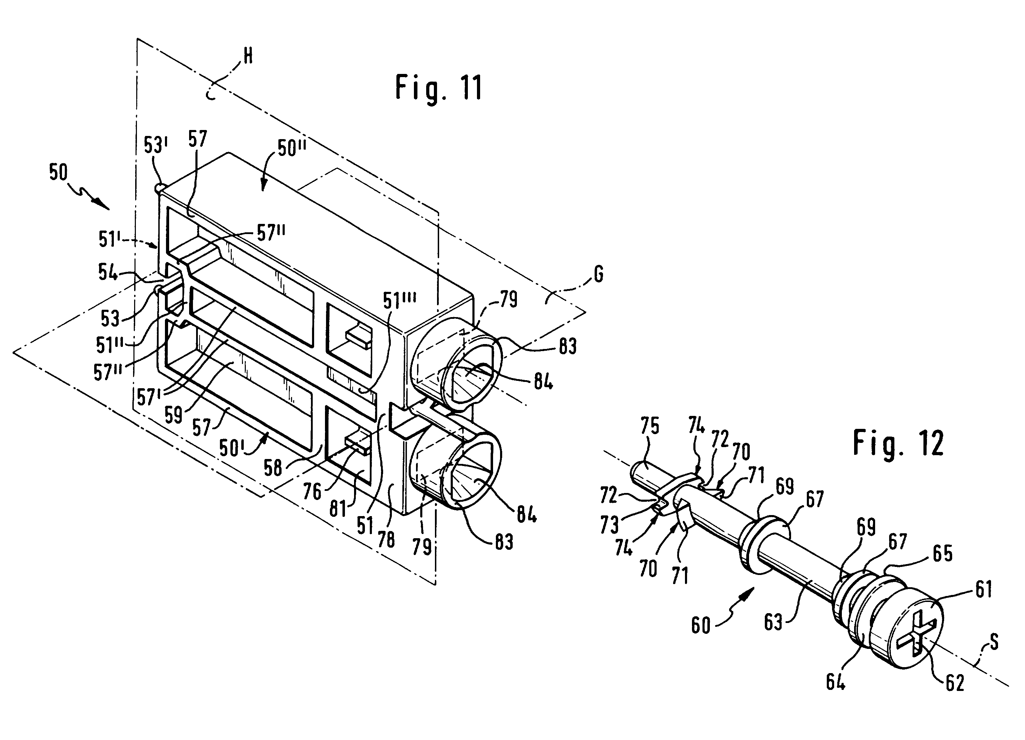

Die Befestigung der Abdeckhauben 40,40',40",40"' an dem Geräteträger 10 erfolgt mittels Schnellverschlußschrauben 60 an Abdeckhaubenhaltern 50, welche fest mit den Traversen 11 bzw. 12 verbunden sind. Die Wirkungsweise der Schnellverschlußschrauben 60 soll im Folgenden anhand der Fig. 11 bis 15 erläutert werden.

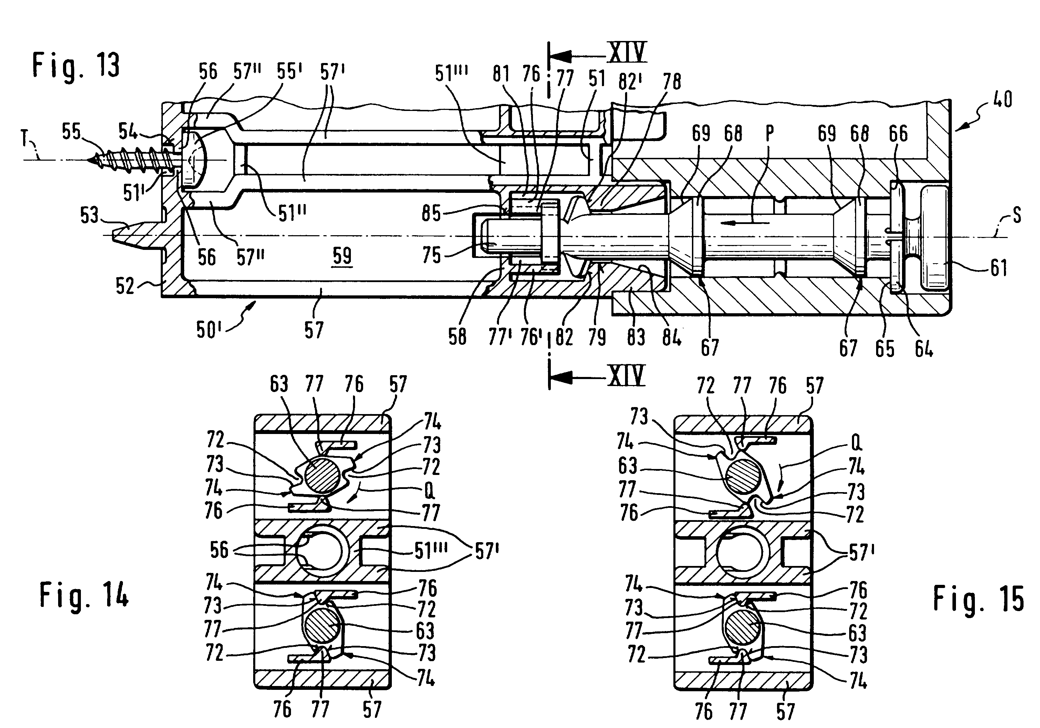

Das erste Ende einer Schnellverschlußschraube 60 bildet ihr Schraubenkopf 61, in dessen Stirnseite ein sogenannter Pozi-Drive 62 eingearbeitet ist. Dieser begrenzt das mit einem entsprechenden Werkzeug auf die Schraube aufbringbare Anzugsmoment, da das Werkzeug beim Überschreiten dieses Wertes selbstätig nicht mehr in die Mitnehmerschlitze des Pozi-Drives 62 eingreift. Vor dem Schraubenkopf ist an dem Schaft 63 der Schnellverschlußschraube 60 ein scheibenförmiger Umfangsbund 64 angeformt, dessen Außendurchmesser demjenigen des Schraubenkopfes 61 entspricht. Der Umfangsbund 64 dient der Ausbildung einer flexiblen Anlagefläche 65, welche sich - wie in Fig. 13 dargestellt - auf einer der durch die zylindrischen Erweiterungen 48 an den Abdeckhauben gebildeten Abstützflächen 66 (vergleiche Fig. 10) abstützt. Die flexible Anlagefläche 65 dient einerseits dem Ausgleich von Fertigungstoleranzen, andererseits sorgt sie dafür, daß eine in der noch zu erläuternden Weise arretierte Schnellverschlußschraube 60 ständig unter einer gewissen axialen Spannung steht, so daß auch ein selbstätiges Lösen der Befestigungsschraube unter Einwirkungen äußerer Vibrationen, wie sie z.B. in Werkshallen auftreten können, verhindert wird.

Jenseits des Umfangsbundes 64 sind an dem Schaft 63 der Schnellverschlußschraube 60 von und hinter ihrer halben Längserstreckung jeweils eine ringförmige Umfangserweiterung 67 angeformt, deren Umfangsflächen 68 mit der Bohrung 47 des Schraubensitzes 41 Gleitpassungen bilden. Auf ihrer dem Schraubenkopf 61 abgewandten Seite weisen die Umfangserweiterungen 67 konische Bereiche 69 auf, die sich von den Umfangsflächen 68 bis zum Schaft 63 erstrekken. Die Umfangserweiterungen 67 dienen einerseits der Lagerung der Schnellverschlußschraube 60 in dem entsprechenden Schraubensitz 41, wobei durch den durch die Umfangsflächen 68 gebildeten schmalen Anlagebereich die Gefahr des Klemmens der Schnellverschlußschraube 60 in dem Schraubensitz 41 erheblich verringert wird. Die in der Bohrung 47 vorgesehene wulstförmige Umfangsreduzierung 49, welche beim Einschieben der Schnellverschlußschraube 60 in Richtung des Pfeiles P in den Schraubensitz 41 durch den konischen Bereich 69 der vorderen Umfangserweiterung 67 elastisch in den die Bohrung 47 umgebenden Werkstoff zurückgedrängt wird, bildet für die eingeschobene Schnellverschlußschraube 60 einen Anschlag, so daß diese nicht mehr aus dem Schraubensitz 41 herausgenommen werden kann und damit unverlierbar ist. Durch die konischen Bereiche 69 wird weiterhin erreicht, daß die Schnellverschlußschraube 60 leichter in den Schraubensitz 41 eingeführt werden kann, da sie durch diese Ausgestaltung selbstzentrierende Eigenschaften aufweist.

In dem Bereich des Schaftes 63, welcher in einen Abdeckhaubenhalter 50 eingreift, sind einander gegenüberliegend zwei radiale Fortsätze 70 angeformt, deren zum Kopf der Schnellverschlußschraube gerichteten Flächen Anlageflächen 71 darstellen. Die radialen Fortsätze 70 sind als Gewindesegmente ausgebildet, d.h. die Anlageflächen 71 bilden zu einer senkrecht zur Schraubenachse S verlaufenden Ebene einen Winkel.

Auf der den Anlageflächen 71 gegenüberliegenden Seite der radialen Fortsätze 70 schließen sich zweite, einander gegenüberliegende, jeweils eine Hinterschneidung 72 und einen Anschlag 73 aufweisende radiale Fortsätze 74, welche ebenfalls an den Schaft 63 der Schraube angeformt sind, an. Die Wirkungsweise der ersten und zweiten Fortsätze 70 und 74 soll weiter unten im Zusammenhang mit der Beschreibung eines Abdeckhaubenhalters 50 erläutert werden. Das zweite Ende einer Schnellverschlußschraube 60 bildet ein zylindrischer Fortsatz 75, welcher in noch zu beschreibender Weise die Führung des in den Abdeckhaubenhalter 50 hineinragenden Teils der Schnellverschlußschraube 60 übernimmt.

Ein Abdeckhaubenhalter 50 ist in Fig. 11 dargestellt. Der als Tandemhalter auch für die Befestigung von zwei Abdeckhauben 40 konzipierte Abdeckhaubenhalter 50 besteht aus zwei spiegelsymmetrisch zu seiner Mittelebene G ausgebildeten Einzelhaltern 50',50", welche mittels auf der Mittelebene G senkrecht stehenden Rippen 51,51',51",51"' miteinander verbunden sind. Die hintere Begrenzung des Abdeckhaubenhalters 50 wird durch eine ebene Anlagewandung 52 gebildet, mit deren Hilfe sich der Abdeckhaubenhalter 50 im montierten Zustand flächig auf einer Traverse 11 bzw. 12 abstützt. An die Anlagewandung 52 sind symmetrisch zur Mittelebene G in Verlängerung der Schraubenachse S einer eingesetzten Schnellverschlußschraube 60 Führungszapfen 53,53' angeformt, welche mit den Löchern 18' der in den Traversen 11 bzw. 12 vorgesehenen Lochreihe 18 in Eingriff bringbar sind. Der Abstand der Führungszapfen 53,53' entspricht gerade dem Rastermaß R. In die Anlagewandung 52 ist eine symmetrisch zur Mittelebene G verlaufende Querausnehmung 54 vorgesehen, in welche eine Schraube 55 gerade so weit einschiebbar ist, daß ihre Achse T mit der durch die Führungszapfen 53,53' aufgespannte Ebene H zusammenfällt. Der Abstand zwischen den Führungszapfen 53 bzw. 53' und der Schraube 55 beträgt damit gerade die Hälfte des Rastermaßes R, so daß diese jedenfalls in ein Loch 18' oder - gegebenenfalls mit Hilfe eines Einsatzes 7 - in eine Lochung 17' einschraubbar ist, wodurch im Zusammenspiel mit der Anlagewandung 52 und den Führungszapfen 53,53' eine spielfreie Befestigung des Abdeckhaubenhalters 50 an einer Traverse 11 bzw. 12 erzielt wird. Damit die Schraube 55 aus der Querausnehmung 54 vor der Montage des Abdeckhaubenhalters 50 nicht herausfallen kann, sind in der Querausnehmung flexible Zungen 56,56' vorgesehen, welche die eingeschobene Befestigungsschraube 55 teilweise hintergreifen.

Die weitere Ausgestaltung der Abdeckhaubenhalter 50 soll im Folgenden unter Bezugnahme auf Fig. 11 und 13 anhand des einen Einzelhalter bildenden unteren Teils 50' des Abdeckhaubenhalters 50 erfolgen. Von der Anlagewandung 52 erstrecken sich parallel zur Ebene G zwei ebene Wandungen 57,57', welche den unteren bzw. oberen Abschluß des Einzelhalters 50' bilden. Die Wandung 57' weist in ihrem der Anlagewandung 52 zugewandten Bereich einen zur Wandung 57 gerichteten Versatz 57" auf, welcher die Aufnahme des Kopfes 55' der Schraube 55 ermöglicht. In dem einer Abdeckhaube 40 zugewandten Bereich des Abdeckhaubenhalters 50 ist eine Querwandung 58 vorgesehen, welche senkrecht zu den Ebenen G und H verläuft und die Wandungen 57,57' miteinander verbindet. Zwischen den Wandung 52,57,57' und 58 ist eine die genannten Wandungen miteinander verbindende Versteifungsrippe 59 vorgesehen, welche mit der Ebene H zusammenfällt. Auf der der Abdeckhaube 40 zugewandten Seite der Querwandung 58 sind Einschnappzungen 76,76' angeformt, welche einander gegenüberliegende Rastnasen 77,77' aufweisen. Die vordere Begrenzung des Einzelhalters 50' ist durch eine Querwandung 78 gegeben, in welche von vorn eine etwa langlochförmige Öffnung 79 eingearbeitet ist, die sich mit ihrer größeren Ausdehnung parallel zur Ebene G erstreckt und in den durch die Querwandung 58, den Wandungen 57 und 57' sowie der Wandung 78 gebildeten Hohlraum 81 mündet. An der Innenseite der Querwandung 78 sind beidseitig der Öffnung 79 parallel zur Ebene G verlaufende Anlageflächen 82,82' angeformt. An der Außenseite der Querwandung 78 ist ein zylindrischer Zentrierfortsatz 83 vorgesehen, dessen Außendurchmesser dem Durchmesser des Schraubenkopfs 61 der Schnellverschlußschraube 60 entspricht. Durch den Zentrierfortsatz 83 ist einerseits die Öffnung 79 hindurchgeführt, andererseits eine sich nach innen hin verjüngende Zentrierbohrung 84 eingearbeitet, welche das Einführen einer Schnellverschlußschraube 60 erleichtern soll. Mit der Zentrierbohrung 84 fluchtend ist in die Querwandung 58 eine zylindrische Zentrierbohrung 85 eingearbeitet, welche sich bis in die Versteifungsrippe 59 erstreckt.

Die Schnellverschlußschraube 60 wirkt, wie im Folgenden beschrieben, mit dem Abdeckhaubenhalter 50 zusammen:

Die in dem Schraubensitz 41 einer Abdeckhaube 40 gelagerte Schnellverschlußschraube 60 wird so gedreht, daß sich ihre radialen Fortsätze 70 durch die langlochförmige Öffnung 79 in den Hohlraum 81 einführen lassen. Dabei greift gleichzeitig der zylindrische Fortsatz der Schnellverschlußschraube 60 in die Zentrierbohrung 85 der Querwandung 58 ein. Während einer anschließenden Drehung der Schnellverschlußschraube 60 greifen deren radiale Fortsätze 70 mit ihren Anlageflächen 71 hinter die Anlageflächen 82,82' der Querwandung 78. Die Schnellverschlußschraube 60 wird dadurch, daß die radialen Fortsätze 70 als Gewindesegmente ausgebildet sind, während einer 90°-Drehung in axialer Richtung in Richtung des Pfeiles P um ca. 1,5 mm verlagert, so daß die entsprechende Abdeckhaube 40 gegen den Abdeckhaubenhalter 50 gedrückt wird. Der Zentrierfortsatz 83 des Abdeckhaubenhalters bildet dabei mit einer zylindrischen Erweiterung 48 des Schraubensitzes 41 eine Gleitpassung. Nach einer 90°-Drehung der Schnellverschlußschraube 60 befindet sich diese in ihrer Verriegelungsstellung, in welcher sie durch Zusammenwirken der Einschnappzungen 76,76', der Rastnasen 77,77' mit den Hinterschneidungen 73 arretiert wird.

Die Wirkungsweise der Arretierung ist in Fig. 14 und 15 dargestellt. Die obere Hälfte der Darstellung in Fig. 14 zeigt die Stellung der an den zweiten Fortsätzen 74 vorgesehenen Hinterschneidungen 72 und der Anschläge 73 relativ zu den Rastnasen 77 aufweisenden Einschnappzungen 76. Zunächst liegen die Rastnasen 77 auf Seitenflächen der zweiten Fortsätze 77 an, deren Abstand dem Durchmesser des Schaftes 63 der Schnellverschlußschraube 60 entspricht. Durch eine Drehung der Schraube in Richtung des Pfeiles Q werden, wie in der oberen Teildarstellung von Fig. 15 gezeigt, die Einschnappzungen 76 elastisch nach außen gedrückt, bis schließlich die Rastnasen 77 in die Hinterschneidungen 72 einschnappen und die Anschläge 73 eine weitere Drehung verhindern. Diese "Arretiert-Stellung" ist in den unteren Hälften der Fig. 14 und 15 dargestellt. Bei der Drehung der Schnellverschlußschraube 60 in diese Stellung wurden auch deren ersten radialen Fortsätze um 90° verlagert, so daß sich nun deren Anlageflächen 71 von den Anlageflächen 82 des Abdeckhaubenhalters 50 abstützen und die Schnellbefestigungsschraube 60 den durch die als Gewindesegmente ausgebildeten radialen Fortsätze 70 maximal erreichbaren Hub ausgeführt hat.

## Patentansprüche

1. Schaltschrank (100) für elektrische Anlagen,
mit einem kastenförmigen Schrankgehäuse,
mit einem im Schrankgehäuse aufgestellten und an dem Schrankgehäuse befestigten Geräteträger (10) zur Montage von elektrischen Schaltelementen und Berührungsschutzeinrichtungen, welcher etwa senkrecht zueinander angeordnete, langgestreckte Traversen (11,12) die einseitig offenen U-Profilen, in die ein sich in Längsrichtung erstreckendes Lochraster (17) eingearbeitet ist, umfaßt, die an Befestigungsstellen (13) miteinander verbunden und entweder als Holme (28) oder als Streben (29) ausgebildet sind, derart, daß an einer Befestigungsstelle (13) das Längsende (15) einer Strebe (29) auf eine Seitenwandung (14) eines zu ihr etwa senkrecht verlaufenden Holms (28) trifft,
und mit lösbar an den Befestigungsstellen (13) vorgesehenen, in Richtung der Längserstreckung der Holme (28) variabel montierbaren Verbindungselementen (20,30), die von der offenen Seite in die U-Profile der Traversen eingreifen,
**dadurch gekennzeichnet,**
daß die Verbindungselemente (20,30) zwei etwa gleichlange, jeweils eine eingearbeitete Gewindebohrung (34) zur Aufnahme einer in eine Lochung (17') eines Holms (28) eingreifenden Befestigungsschraube (37) aufweisende erste Befestigungsschenkel (32,32') umfassen, welche von der offenen Seite der U-Profile der Holme (28) in diese einschiebbar sind, und
daß die Verbindungselemente (20,30) etwa symmetrisch zu einer den Abstand der ersten Befestigungsschenkel halbierenden Mittelebene (K,K') zwei zu den ersten Befestigungsschenkeln (32,32') im wesentlichen parallele, jeweils eine eingearbeitete Gewindebohrung (24,24') zur Aufnahme einer in eine Lochung (17') einer Strebe (29) eingreifenden Befestigungsschraube (37) aufweisende zweite, von der offenen Seite der U-Profile der Streben (29) in diese einschiebbare Befestigungsschenkel (38,38') umfassen, deren Länge etwa derjenigen der ersten Befestigungsschenkel (32,32') entspricht und die seitlich versetzt zu den ersten Befestigungsschenkeln (32,32') angeordnet sind, so daß der senkrechte Abstand der einander zugewandten Seiten (36,39;36',39') der ersten und zweiten Befestigungsschenkel mindestens der Materialstärke einer Seitenwandung der Holme (28) und der Abstand der einander zugewandten Seitenflächen (22,23) der zweiten Befestigungsschenkel (38,38') mindestens der doppelten Materialstärke einer Seitenwandung der Streben (29) entsprechen.

2. Schaltschrank nach Anspruch 1, **dadurch gekennzeichnet**, daß die Holme (28) und Streben (29) dasselbe Profil aufweisen.

3. Schaltschrank nach einem der Ansprüche 1 oder 2, **dadurch gekennzeichnet**, daß das Lochraster (17) regelmäßig und in der Vorderfläche (16) der Traversen (11,12) angeordnet ist und daß die Gewindebohrungen (24,24';34,34') in die Stirnseite der Befestigungsschenkel (32,32';38,38') eingeordnet sind.

4. Schaltschrank nach Anspruch 3, **dadurch gekennzeichnet**, daß der Abstand benachbarter Lochungen (17') des Lochrasters (17) abwechselnd dem Einfachen und dem Doppelten eines Rastermaßes R entspricht.

5. Schaltschrank nach Anspruch 4, **dadurch gekennzeichnet**, daß der Abstand der Gewindebohrungen (34,34') der ersten Befestigungsschenkel (32,32') dem Doppelten des Rastermaßes (R) entspricht.

6. Schaltschrank nach Anspruch 4 oder 5, **dadurch gekennzeichnet**, daß der Abstand der Gewindebohrungen (24,24') der zweiten Befestigungsschenkel (32,32') einen dem Rastermaß (R) entsprechenden Abstand aufweisen.

7. Schaltschrank nach einem der Ansprüche 1 bis 6, **dadurch gekennzeichnet**, daß die ersten Befestigungsschenkel (32,32') jeweils in einer Ebene (E,E') liegende Seitenflächen (35;35';36,36') umfassen, die an den Innenflächen der Seitenwandungen (14) einer Traverse (11,12) anliegen.

8. Schaltschrank nach Anspruch 7, **dadurch gekennzeichnet**, daß die zu den Ebenen (E,E') senkrecht verlaufenden Flächen (22,22';23,23') der zweiten Befestigungsschenkel (38,38') an den Innenflächen der Seitenwandungen (14) der Traversen (11,12) anliegen.

9. Schaltschrank nach Anspruch 8, **dadurch gekennzeichnet**, daß der senkrechte Abstand der einander zugewandten Seitenflächen (36,39;36',39') der ersten und zweiten Befestigungsschenkel (32,32';38,38') so gewählt ist, daß die sich zwischen den einander zugewandten Seitenflächen (36,39;36',39') der ersten und zweiten Befestigungsschenkel (32,32';38,38') hindurcherstreckende Seitenwandung (14) der einen Holm (29) bildenden Traverse (11,12) an den Seitenflächen (36,39;36',39') anliegt.

10. Schaltschrank nach Anspruch 8 oder 9, **dadurch gekennzeichnet**, daß der Abstand der einander zugewandten Seitenflächen (22',23) der zweiten Befestigungsschenkel (38,38') die doppelte Materialstärke der Seitenwandungen (14) der Streben (29) bildenden Traversen (11,12) um etwa 3mm übersteigt.

11. Schaltschrank nach einem der Ansprüche 1 bis 10, **dadurch gekennzeichnet**, daß zumindest jeweils zwei voneinander beabstandete, an zwei gegenüberliegenden, jeweils einer Schrankgehäusewandung benachbarten Traversen (11,12) vorgesehene Verbindungselemente (20) Montageschenkel (21) umfassen, die mit dem Schrankgehäuse zusammenwirken.

12. Schaltschrank nach Anspruch 11, **dadurch gekennzeichnet**, daß die Montageschenkel (21) zumindest an denjenigen Verbindungselementen (20) vorgesehen sind, welche die den oberen bzw. den unteren Abschluß des Geräteträgers bildenden Streben (29') mit den die seitlichen Begrenzungen des Geräteträgers bildenden Holmen (28') miteinander verbinden.

13. Schaltschrank nach Anspruch 11 oder 12, **dadurch gekennzeichnet**, daß die Montageschenkel (21) etwa, vorzugsweise genau parallel zu den Befestigungsschenkeln (32,32';38,38') verlaufend an die Verbindungselemente (20) angeformt sind.

14. Schaltschrank nach Anspruch 13, **dadurch gekennzeichnet**, daß an dem Schrankgehäuse entlang der Seitenwandungen etwa horizontal verlaufende Tiefentragschienen (3) vorgesehen sind, welche mit den Montageschenkeln (21) der Verbindungselemente (20) zusammenwirken.

15. Schaltschrank nach Anspruch 14, **dadurch gekennzeichnet**, daß die Tiefentragschienen (3) ein regelmäßiges Lochraster (5) umfassen.

16. Schaltschrank nach Anspruch 15, **dadurch gekennzeichnet**, daß der Abstand benachbarter Lochungen des Lochrasters (5) der Tiefentragschienen (3) gerade dem Rastermaß (R) entspricht.

17. Schaltschrank nach Anspruch 16, **dadurch gekennzeichnet,** daß jeder Montageschenkel (21) auf seiner der Tiefentragschiene zugewandten Seite (26) angeformte, entsprechend dem Rastermaß (R) oder einem Vielfachen davon beabstandete Führungsbutzen (27) umfaßt, welche mit den Lochungen des Lochrasters (5) zusammenwirken.

18. Schaltschrank nach Anspruch 17, **dadurch gekennzeichnet**, daß jeder Montageschenkel (21) zwei Führungsbutzen (27) umfaßt, deren Abstand dem Doppelten des Rastermaßes (R) entspricht und daß in der Mitte zwischen den Führungsbutzen (27) eine Gewindebohrung (28) vorgesehen ist, in welche eine durch die entsprechende Lochung des Lochrasters (5) durchgeführte Befestigungsschraube eindrehbar ist.

19. Schaltschrank nach einem der Ansprüche 1 bis 18, **dadurch gekennzeichnet**, daß die Traversen (11,12) und Verbindungselemente (20,20) aus elektrisch leitenden Werkstoffen hergestellt sind.

20. Schaltschrank nach einem der Ansprüche 1 bis 19, **dadurch gekennzeichnet**, daß die Seitenwandungen (14) der Traversen (11,12) sich längs erstreckende Lochreihen (31) aufweisen.

21. Schaltschrank nach einem der Ansprüche 1 bis 20, **dadurch gekennzeichnet**, daß zumindest die vertikalen Traversen an einem Ende eine dem Toleranzabgleich dienende Markierung aufweisen.

22. Schaltschrank (100) nach einem der Ansprüche 1 bis 21,
**dadurch gekennzeichnet**, daß auf der den Schaltelementen zugewandten Vorderseite des Geräteträgers, sich etwa senkrecht von der durch die Vorderseite (16) gebildeten Ebene forterstreckenden Abdeckhaubenhalter (50) aus einem elektrisch isolierenden Material montierbar sind,
daß den Geräteträger (10) zwischen den elektrischen Schaltgeräten abdeckenden Abdeckhauben (40) aus einem elektrisch isolierenden Material vorgesehen sind, welche von den Abdeckhaubenhaltern (50) getragen werden
daß in in den Abdeckhauben (40) eingearbeiteten Schraubensitzen (41) geführte Schnellverschlußschrauben (60) aus elektrisch isolierendem Kunststoff zur wahlweisen Verankerung der Abdeckhauben (40) an den Abdeckhaubenhaltern (50) vorgesehen sind, wobei eine Schnellverschlußschraube (60) einen langgestrecketen Schaft (63), an dessen einem Ende ein radial überstehender, eine Abdeckhaube hintergreifender Schraubenkopf (61) und an dem aus der Abdeckhaube (40) herausragenden Teil des Schafts (63) Eingreifmittel (70) angeformt sind, die wahlweise mit einem Abdeckhaubenhalter (50) in Eingriff bringbar sind,
und daß an der Schnellverschlußschraube (60) eine seinem Kopf (61) vorgelagerte, nachgiebige Anlagefläche (65) vorgesehen ist, mit welcher sich die Schnellverschlußschraube (60) an der Abdeckhaube (40) abstützt.

23. Schaltschrank nach Anspruch 22, **dadurch gekennzeichnet**, daß die Anlagefläche (65) durch einen scheibenartigen, kreis- oder kreissegmentförmigen Umfangsbund (64) ausgebildet ist, welcher zu dem Schraubenkopf (61) beabstandet an dem Schaft (63) angeformt ist und dessen Außendurchmesser kleiner oder gleich demjenigen des Schraubenkopfes (61) ist.

24. Schaltschrank nach Anspruch 22 oder 23, **dadurch gekennzeichnet**, daß in den den Abddeckhauben (40) zugewandten Stirnflächen der Abdeckhaubenhalter (50) im Querschnitt etwa langlochförmige Öffnungen (79) vorgesehen sind, welche jeweils mit einem Hohlraum (81) kommunizieren, wobei an der die Öffnung (79) enthaltenden Wandung des Hohlraums parallel zu diesem Abstützflächen (82) vorgesehen sind und daß die an den Schnellverschlußschrauben (60) angeformten Eingreifmittel mindestens einen, vorzugsweise zwei einander gegenüberliegende, mit der Längsachse der Schnellverschlußschraube etwa 90°-Winkel bildende radiale Fortsätze (70) umfassen, deren zum Kopf der Schnellverschlußschraube gerichteten Flächen als Anlageflächen (71) ausgebildet sind, welche nach Einführen in die im Querschnitt langlochförmige Öffnung (79) im Abdeckhaubenhalter (40) durch eine etwa 90°-Drehung der Schnellverschlußschraube (60) hinter die Abstützflächen (82) verlagerbar sind und so die Schnellverschlußschraube (60) in axialer Richtung arretieren.

25. Schaltschrank nach einem der Ansprüche 22 bis 24, **dadurch gekennzeichnet**, daß die radialen Fortsätze (70) als Gewindesegmente ausgebildet sind, so daß die Schnellverschlußschraube (60) bei der dem Arretrieren dienenden 90°-Drehung einen Hub entlang ihrer Längsachse (S) vollzieht, derart, daß sich ihre freie Schaftlänge verkürzt.

26. Schaltschrank nach Anspruch 25, **dadurch gekennzeichnet**, daß der Hub etwa 1,5mm beträgt.

27. Schaltschrank nach einem der Ansprüche 22 bis 26, **dadurch gekennzeichnet**, daß in dem Hohlraum (81) des Abdeckhaubenhalters (50) Einschnappzungen (76) vorgesehen sind, welche in der "Arretiert"-Stellung der Schnellverschlußschraube (60) in an dieser vorgesehene Hinterschneidungen (72), die sich etwa parallel zu ihrer Längsachse (S) erstrecken, einrasten.

28. Schaltschrank nach einem der Ansprüche 22 bis 27, **dadurch gekennzeichnet**, daß in Befestigungsdrehrichtung gesehen hinter den Hinterschneidungen (72) Vorsprünge (73) an der Schnellverschlußschraube angeformt sind, welche in der "Arretiert"-Stellung an den Einschnappzungen anschlagen.

29. Schaltschrank nach einem der Ansprüche 22 bis 28, **dadurch gekennzeichnet**, daß an der der Abdeckhaube (40) zugewandten Stirnseite der Abdeckhaubenhalter (50) zylindrische, die langlochförmige Öffnung (79) symmetrisch umgebende, mit einer Zentrierausnehmung (48) einer Abdeckhaube (40) zusammenwirkende Zentrierfortsätze (83) angeformt sind, deren Außendurchmesser gerade dem Außendurchmesser des Schraubenkopfes (61) einer Schnellverschlußschraube (60) entspricht.

30. Schaltschrank nach einem der Ansprüche 22 bis 29, **dadurch gekennzeichnet**, daß die Abdeckhauben (40) wannenförmig mit auf der Grundfläche (43) und zueinander etwa senkrecht stehenden Seitenwandungen (46) ausgebildet sind.

31. Schaltschrank nach Anspruch 30, **dadurch gekennzeichnet**, daß entlang den seitlichen Kanten im Innenraum der wannenförmigen Abdeckhauben (40) die aneinandergrenzenden Seitenwandungen (46) verbindende Versteifungsprofile (45) vorgesehen sind, in welche die Schraubensitze (41) eingearbeitet sind.

32. Schaltschrank nach Anspruch 31, **dadurch gekennzeichnet**, daß an beiden Enden der Schraubensitze (41) zylindrische Erweiterungen (48) vorgesehen sind, welche mit dem Schraubenkopf (61) einer eingeführten Schnellverschlußschraube (60) bzw. mit einem Zentrierfortsatz (83) eines Abdeckhaubenhalters (50) Gleitpassungen bilden.

33. Schaltschrank nach einem der Ansprüche 22 bis 32, **dadurch gekennzeichnet**, daß eine Schnellverschlußschraube (60) auf ihrem Schaft (63) beidseitig ihrer halben Längserstreckung mindestens eine etwa ringförmige Umfangserweiterung (67) umfaßt, deren Umfangsflächen (68) mit dem Schraubensitz (41) Gleitpassungen bilden, wobei die Umfangserweiterungen (67) voneinander beabstandet sind und auf der von dem Schraubenkopf (61) fortweisenden Seite konisch zulaufende Bereiche (69) umfassen.

34. Schaltschrank nach Anspruch 33, **dadurch gekennzeichnet**, daß in den Schraubensitzen (41) axial etwa in der Mitte eine Umfangsreduzierung (49) vorgesehen ist.

35. Schaltschrank nach einem der Ansprüche 22 bis 34, **dadurch gekennzeichnet,** daß an dem in einen Abdeckhaubenhalter (50) hineinragenden Ende der Schnellverschlußschraube (60) ein zylindrischer Zentrierfortsatz (83) angeformt ist, welcher mit einer in der der langlochförmigen Öffnung (79) gegenüberliegenden Querwandung (58) des Hohlraumes (81) angeordneten Zentrierbohrung (85) zusammenwirkt.

36. Schaltschrank nach einem der Ansprüche 22 bis 35, **dadurch gekennzeichnet**, daß die Stirnseite des Schraubenkopfes (61) der Schnellverschlußschraube (60) mit einem das über ein Werkzeug aufbringbare Anzugsdrehmoment begrenzenden Pozi-Drive (62) ausgestattet ist.

37. Schaltschrank nach einem der Ansprüche 22 bis 35, **dadurch gekennzeichnet**, daß die Stirnseite des Schraubenkopfes der Schnellverschlußschraube mit einem einfachen Schlitz ausgestattet ist, in welchen nach der Montage der entsprechrenden Abdeckhaube ein Verriegelungsfortsatz einer Plombierungskappe einschiebbar ist, welche an der Abdeckhaube mittels einer Plombe gesichert werden kann.

38. Schaltschrank (100) nach einem der Ansprüche 1 bis 37,
**dadurch gekennzeichnet**,
daß auf der den Schaltelementen zugewandten Vorderseite (16) des Geräteträgers (10) sich etwa senkrecht von der durch die Vorderseite (16) gebildeten Ebene forterstreckende Abdeckhaubenhalter (50) aus einem elektrisch isolierenden Material montierbar sind,
daß in dem Geräteträger (10) eine regelmäßige Anordnung von Befestigungsöffnungen (18') vorgesehen ist, mit welchem Befestigungsmittel (53,53',55), die auf der dem Geräteträger zugewandten Seite (52) der Abdeckhaubenhalter (50) angeordnet sind, in Eingriff bringbar sind,
daß die Abdeckhaubenhalter (50) als Tandemhalter (50',50") zur Befestigung zweier aneinandergrenzender Abdeckhauben ausgebildet sind,
daß sich die Abdeckhaubenhalter (50) mit einer Anlagewandung (52) flächig auf dem Geräteträger abstützen,
daß die Befestigungsmittel (53,53',55) mindestens zwei Abstand voneinander aufweisende, von der Anlagewandung vorspringende Führungszapfen (53,53') umfassen, welche mit den Befestigungslöchern (18') eine Passung bilden
und daß zwischen den Führungszapfen (53,53') mindestens ein mit dem Geräteträger (10) zusammenwirkendes, lösbares Verriegelungsglied (55) vorgesehen ist, welches den Abdeckhaubenhalter (50) an dem Geräteträger (10) verankert.

39. Schaltschrank nach Anspruch 38, **dadurch gekennzeichnet**, daß der Abdeckhaubenhalter (50) zwei zu seiner Mittelachse symmetrisch angeordnete Führungszapfen (53,53') umfaßt, deren Abstand dem Rastermaß (R) entspricht.

40. Schaltschrank nach Anspruch 39, **dadurch gekennzeichnet**, daß die regelmäßige Anordnung von Befestigungsöffnungen (18') aus Lochreihen (18) besteht, wobei der Abstand benachbarter Löcher dem halben Rastermaß (R) entspricht.

41. Schaltschrank nach Anspruch 40, **dadurch gekennzeichnet**, daß die Löcher (18') der Lochreihe (18) einen kleineren Durchmesser aufweisen als eventuell in dem Geräteträger (10) vorgesehene Lochungen (17') eines ersten Lochrasters (17).

42. Schaltschrank nach Anspruch 40 oder 41, **dadurch** **gekennzeichnet**, daß das Verriegelungsglied eine Schraube (55) ist, die in einer in der Mitte zwischen den Zapfen (53,53') angeordneten Querausnehmung (54) ruht, derart, daß die Längsachse (T) einer vollständig eingeschobenen Befestigungsschraube (55) mit der Mittelebene H des Abdeckhaubenhalters (50) zusammenfällt.

43. Schaltschrank nach Anspruch 42, **dadurch gekennzeichnet**, daß in der Querausnehmung (54) flexible Zungen (56) vorgesehen sind, welche die Befestigungsschraube (55) hintergreifen.

## Claims

1. Switchgear cabinet (100) for electrical installations,
with a box-shaped cabinet housing,
with an equipment carrier (10) mounted in the housing and secured to the housing for mounting electrical switchgear elements and contact-preventing devices, which comprises substantially mutually perpendicularly arranged longitudinally extended bars (11, 12) of U-shaped section open at one side, in which there is formed a longitudinally extending array of holes (17), the bars being connected together at attachment points (13) and being in the form of either beams (28) or struts (29), in such a way that at an attachment point (13) the longitudinal end (15) of a strut (29) engages a side wall (14) of a beam (28) extending substantially perpendicular to it,
with connecting elements (20, 30) provided detachably at the attachment points (13) and capable of being mounted at varying points in the direction of the length of the beam (28), the connecting elements engaging in the open sides of the U-sections of the bars,
characterised in that,
the connecting elements (20, 30) comprise two first attachment limbs (32, 32') of approximately equal length, each having a screw-threaded bore (34) machined in it for receiving an attachment screw (37) engaging in a hole (17') in a beam (28), the limbs being capable of insertion into the beams (28) from the open side of the U-section, and
that the connecting elements (20, 30) have two second attachment limbs (38, 38') substantially symmetrical with respect to a central plane (K, K') halving the spacing between the first attachment limbs, the second limbs each having a screw-threaded bore (24, 24') machined in it substantially parallel to the first attachment limbs (32, 32') for receiving an attachment screw (37) engaging in a hole (17') in a strut (29), the second limbs being capable of insertion into these struts from the open side of the U-section, and the lengths corresponding substantially to those of the first attachment limbs (32, 32') and being arranged laterally offset with respect to the first attachment limbs (32, 32'), so that the perpendicular spacing between the mutually facing sides (36, 39; 36', 39') of the first and second attachment limbs corresponds at least to the thickness of the material of a side wall of the beams (28) and the spacing between the mutually facing side faces (22, 23) of the second attachment limbs (38, 38') corresponding to at least twice the thickness of the material of a side wall of the struts (29).

2. Switchgear cabinet according to Claim 1, characterised in that the beams (28) and struts (29) have the same profile.

3. Switchgear cabinet according to one of Claims 1 or 2, characterised in that the array of holes (17) is regular and is arranged in the front face (16) of the bars (11, 12) and that the screw-threaded bores (24, 24'; 34, 34') are formed in the end faces of the attachment limbs (32, 32'; 38, 38').

4. Switchgear cabinet according to Claim 3, characterised in that the spacing between adjacent holes (17') in the array of holes (17) corresponds alternately to one times and two times the basic pitch R of the array.

5. Switchgear cabinet according to Claim 4, characterised in that the spacing between the screw-threaded bores (34, 34') in the first attachment limbs (32, 32') corresponds to twice the basic pitch (R) of the array.

6. Switchgear cabinet according to Claim 4 or 5, characterised in that the spacing between the screw-threaded bores (24, 24') in the second attachment limbs (32, 32') has a spacing corresponding to the basic pitch (R) of the array.

7. Switchgear cabinet according to one of Claims 1 to 6, characterised in that the first attachment limbs (32, 32') each have side faces (35; 35'; 36, 36') lying in one plane (E, E') and engaging the inner faces of the side wall (14) of a bar (11, 12).

8. Switchgear cabinet according to Claim 7, characterised in that the faces (22, 22'; 23, 23') of the second attachment limbs (38, 38') which extend perpendicular to the planes (E, E') engaged the inner faces of the side wall (14) of the bars (11, 12).

9. Switchgear cabinet according to Claim 8, characterised in that the perpendicular spacing between the mutually facing side faces (36, 39; 36', 39') of the first and second attachment limbs (32, 32'; 38, 38') is chosen so that the side wall (14) of the bar (11, 12) forming a beam (29) and extending between the mutually facing side faces (36, 39; 36', 39') of the first and second attachment limbs (32, 32'; 38, 38') engages against the side faces (36, 39; 36', 39').

10. Switchgear cabinet according to Claim 8 or 9, characterised in that the spacing between the mutually facing side faces (22', 23) of the second attachment limbs (38, 38') exceeds twice the thickness of the material of the side wall (14) of the bars (11, 12) forming the struts (29) by about 3mm.

11. Switchgear cabinet according to one of Claims 1 to 10, characterised in that at least two mutually spaced apart connecting elements (20) provided on two mutually facing bars (11, 12) each adjacent to a wall of the cabinet housing include mounting limbs (21) which cooperate with the cabinet housing.

12. Switchgear cabinet according to Claim 11, characterised in that the mounting limbs (21) are provided at least on those connecting elements (20) which connect the struts (29') forming the upper and lower terminating ends of the equipment carrier to the beams (28') forming the lateral boundaries of the equipment carrier.

13. Switchgear cabinet according to Claim 11 or 12, characterised in that the mounting limbs (21) are formed on the connecting elements (20) to extend approximately, and preferably exactly, parallel to the attachment limbs (32, 32'; 38, 38').

14. Switchgear cabinet according to Claim 13, characterised in that shelf-support rails (3) are provided on the cabinet housing extending substantially horizontally along the side walls and co-operating with the mounting limbs (21) of the connecting elements (20).

15. Switchgear cabinet according to Claim 14, characterised in that the shelf-support rails (3) have an array of regularly spaced holes (5).

16. Switchgear cabinet according to Claim 15, characterised in that the spacing between adjacent holes in the array (5) in the rails (3) corresponds exactly to the pitch (R) of the other array.

17. Switchgear cabinet according to Claim 16, characterised in that each mounting limb (21) has formed on its side (26) which faces the rail a number of guide buttons spaced at a pitch corresponding to the pitch (R) of the array or a multiple of it and co-operating with the holes in the array of holes (5).

18. Switchgear cabinet according to Claim 17, characterised in that each mounting limb (21) has two guide buttons (27) of which the spacing corresponds to twice the pitch (R) of the array and that a screw-threaded bore (28) is provided in the middle between the guide buttons (27), into which an attachment screw can be inserted, passing through the corresponding hole in the array of holes (5).

19. Switchgear cabinet according to one of Claims 1 to 18, characterised in that the bars (11, 12) and connecting elements (20, 20) are made of electrically conducting materials.

20. Switchgear cabinet according to one of Claims 1 to 19, characterised in that the side walls (14) of the bars (11, 12) have longitudinally extending rows of holes (31).

21. Switchgear cabinet according to one of Claims 1 to 20, characterised in that at least the vertical bars have marking at one end to take up tolerances.

22. Switchgear cabinet (100) according to one of Claims 1 to 21,
characterised in that covering lid holders (50) of electrically insulating material are capable of being mounted on the front face of the equipment carrier which faces towards the switchgear elements and projecting approximately perpendicularly from the plane formed by the front face (16),
that covering lids (40) of electrically insulating material are provided, which cover the equipment carriers (10) between the electrical equipment and which are carried by the covering lid holders (50)
that rapid-connection screws (60) of electrically insulating material guided in screw seatings (41) formed in the covering lids (40) are provided on the covering lid holders (50) for securing the covering lids (40) at will, a rapid-connection screw (60) having formed on it a longitudinally extending shank (63) on one end of which there is formed a radially projecting screwhead (61) engaging behind a covering lid and on the part of the shank (63) which projects out of the covering lid (40) there are formed engaging means (70) which can brought at will into engagement with a covering lid holder (50),
and that there is provided on the rapid-connection screw (60) a yielding engaging face (65) which is in front of its head (61) and by which the rapid-connection screw (60) engages the covering lid (40).

23. Switchgear cabinet according to Claim 22, characterised in that the engaging face (65) is formed by a disc-like, circular or circular segmental peripheral collar (64) which is formed on the shank (63) spaced away from the screwhead (61) and of which the outside diameter is smaller than or equal to that of the screwhead (61).

24. Switchgear cabinet according to Claim 22 or 23, characterised in that openings (79) of approximately elongated cross-section are provided in the end faces of the covering lid holder (50) which face towards the covering lids (40) and each communicate with a respective cavity (81), abutment faces (82) being provided on the wall of the cavity which contains the opening (79) and parallel to it and that the engaging means formed on the rapid-connection screws (60) comprise at least one, preferably two mutually opposite, radial projections (70) making approximately a 90° angle with the longitudinal axis of the rapid-connection screw, the faces of the projections which are directed towards the head of the screw being formed as engaging faces (71) which, after insertion into the opening (79) of elongated cross-section in the covering lid holder (40) are displaced to a position behind the abutment faces (82) by rotation of the screw (60) through approximately 90° and thereby secure the screw (60) in an axial direction.

25. Switchgear cabinet according to one of claims 22 to 24, characterised in that the radial projections (70) are in the form of segments of screw threads so that the rapid-connection screw (60) performs a stroke along its longitudinal axis (S) on the 90° rotation that performs locking action, in such a way as to reduce the free length of the shank.

26. Switchgear cabinet according to Claim 25, characterised in that the stroke amounts to about 1.5mm.

27. Switchgear cabinet according to one of Claims 22 to 26, characterised in that snap-in tongues (76) are provided in the cavity (81) in the covering lid holder (50) and in the "locking" position of the rapid-connection screw (60), they engage in undercuts (72) provided in it and extending approximately parallel to its longitudinal axis (S).

28. Switchgear cabinet according to one of claims 22 to 27, characterised in that, looking in the direction of rotation for securing, projections (73) are formed on the rapid-connection screw behind the undercuts (72) to engage against the snap-in tongues in the "locking" position.

29. Switchgear cabinet according to one of Claims 22 to 28, characterised in that cylindrical locating projections (83) are formed on the faces of the covering lid holder (50) which face towards the covering lid (40), symmetrically surrounding the elongated opening (79) and co-operating with a locating recess (48) in a covering lid (40), the outside diameter of the projections corresponding exactly to the outside diameter of the screwhead (61) of a rapid-connection screw (60).

30. Switchgear cabinet according to one of Claims 22 to 29, characterised in that the covering lids (40) are made of tray-like shape with side walls (46) projecting perpendicular to the base surface (43) and to one another.

31. Switchgear cabinet according to Claim 30, characterised in that stiffening profiles (45) in which the screw seatings (41) are machined are provided along the side edges in the inside of the tray-shaped covering lids (40) and connecting the mutually bounding side walls (46).

32. Switchgear cabinet according to Claim 31, characterised in that cylindrical widened-outportions (48) are provided at both ends of the screw seatings (41), forming sliding fits with the screwhead (61) of an inserted rapid-connection screw (60) and with a locating projection (83) of a covering lid holder (50).

33. Switchgear cabinet according to one of Claims 22 to 32, characterised in that a rapid-connection screw (60) has on its shank (63) on both sides of half of its longitudinal extent at least one annular circumferential widened-outportion (67), of which the circumferential faces (68) form sliding fits with the screw seating (41), the widened-out portions (67) being spaced apart from one another and including conically divergent regions (69) on the side projecting away from the screwhead (61).

34. Switchgear cabinet according to Claim 33, characterised in that a reduction (49) in the circumference is provided in the screw seating (41) axially substantially in the middle.

35. Switchgear cabinet according to one of Claims 22 to 34, characterised in that a cylindrical locating projection (83) is formed on the end of the rapid-connection screw (60) which projects into a covering lid holder (50) and co-operates with a locating bore (85) arranged in the transverse wall (58) of the cavity (81) which lies opposite the elongated opening (79).

36. Switchgear cabinet according to one of Claims 22 to 35, characterised in that the end face of the screwhead (61) of the rapid-connection screw (60) is equipped with a Pozi-Drive (62) limiting the tightening torque that can be applied by a tool.

37. Switchgear cabinet according to one of Claims 22 to 35, characterised in that the end face of the screwhead of the rapid-connection screw is equipped with a simple slot in which a locking projection of a sealing cap is inserted after the mounting of the corresponding covering lid and the sealing cap can be secured to the covering lid by means of a seal.

38. Switchgear cabinet (100) according to one of Claims 1 to 37,
characterised in that
covering lid holders (50) of electrically insulating material are capable of being mounted on the front face (16) of the equipment carrier (10) which faces towards the switching elements, projecting approximately perpendicularly from the plane formed by the front face (16),
that there is provided in the equipment carrier (10) a regular arrangement of attachment openings (18'), with which attachment means (53, 53', 55) arranged on the side (52) of the covering lid holder (50) which faces towards the equipment carrier can be brought into engagement,
that the covering lid holders (50) are formed as tandem holders (50', 50'') for the attachment of two mutually adjacent covering lids,
that the covering lid holders (50) engage with an engaging wall (52) flat against the equipment carrier,
that the attachment means (53, 53', 55) include at least two guide pins (53, 53') spaced apart from one another and projecting from the engaging wall and fitting into the attachment holes (18')
and that between the guide pins (53, 53') there is provided at least one releasable locking member (55) co-operating with the equipment carrier (10) and anchoring the covering lid holder (50) to the equipment carrier (10).

39. Switchgear cabinet according to Claim 38, characterised in that the covering lid holder (50) includes two guide pins (53, 53') arranged symmetrically with respect to its central axis and of which the spacing corresponds to the pitch of the array (R).

40. Switchgear cabinet according to Claim 39, characterised in that the regular arrangement of attachment openings (18') comprises rows of holes (18), the spacing between adjacent holes corresponding to half the pitch of the array (R).

41. Switchgear cabinet according to Claim 40, characterised in that the holes (18') of the row of holes (18) have a smaller diameter than any holes (17') of a first array of holes (17) which may be provided in the equipment carrier (10).

42. Switchgear cabinet according to Claim 40 or 41, characterised in that the locking member is a screw (55) which engages in a transverse recess (54) arranged in the middle between the pins (53, 53') in such a way that the longitudinal axis (T) of a fully inserted attachment screw (55) coincides with the central plane H of the covering lid holder (50).

43. Switchgear cabinet according to Claim 42, characterised in that flexible tongues (56) are provided in the transverse recess (54), engaging behind the attachment screw (55).

## Revendications

1. Armoire de branchement (100) pour installations électriques, comprenant un boîtier d'armoire en forme de caisse, un support d'appareils (10) monté dans le boîtier d'armoire et fixé sur le boîtier d'armoire, support qui sert au montage d'éléments électriques de branchement et de dispositifs de commutation de proximité, lequel comprend des traverses (11, 12), disposées à peu près perpendiculairement les unes aux autres, à savoir des profilés en U, ouverts d'un côté, dans lesquels est usiné une rangée de trous (17) s'étendant dans le sens longitudinal, traverses qui sont reliées les unes aux autres en des points de fixation (13) et qui sont constituées soit comme montants (28) soit comme entretoises (29), d'une manière telle que l'extrémité longitudinale (15) d'une entretoise (29) arrive en un point de fixation (13) sur une paroi latérale (14) d'un montant (28), s'étendant à peu près perpendiculairement à celle-ci, et comprenant en outre des éléments de liaison (20, 30), prévus de manière amovible aux points de fixation (13) qui peuvent être montés de façon variable dans le sens de l'étendue longitudinale des montants (28), éléments de liaison (20, 30) qui viennent en prise par le côté ouvert dans les profilés en U des traverses,
caractérisée en ce que
• les éléments de liaison (20, 30) comprennent deux premières branches de fixation (32, 32'), ayant à peu près la même longueur, qui présentent respectivement un alésage fileté (34) usiné pour recevoir une vis de fixation (37) venant en prise dans un trou (17') d'un montant (28), branches de fixation (32, 32') qui peuvent être enfoncées par le côté ouvert des profilés en U des montants (28) dans ceux-ci, et
• les éléments de liaison (20, 30) comprennent, de façon à peu près symétrique par rapport à un plan médian (K, K') divisant par moitié l'écartement des premières branches de fixation, deux secondes branches de fixation (38, 38') que l'on peut enfoncer par le côté ouvert des profilés en U des entretoises (29) dans celles-ci, secondes branches de fixation (38, 38') qui sont sensiblement parallèle aux premières branches de fixation (32, 32'), et qui présentent respectivement un alésage fileté (24, 24') usiné dedans pour recevoir une vis de fixation (37) qui vient en prise dans un trou (17') d'une entretoise (29), la longueur des secondes branches de fixation (38, 38') correspondant à peu près à celle des premières branches de fixation (32, 32') et ces secondes branches de fixation (38, 38') étant disposées de façon décalée latéralement par rapport aux premières branches de fixation (32, 32'), de telle sorte que la distance verticale entre les côtés tournés l'un vers l'autre (36, 39; 36', 39') des premières et des secondes branches de fixation corresponde au moins à l'épaisseur de matière d'une paroi latérale des montants (28) et la distance entre les faces latérales tournées l'une vers l'autre (22, 23) des secondes branches de fixation (38, 387') corresponde au moins à deux fois l'épaisseur de matière d'une paroi latérale des entretoises (29).

2. Armoire de branchement selon la revendication 1,
caractérisée en ce que
les montants (28) et les entretoises (29) présentent le même profil.

3. Armoire de branchement selon l'une des revendications 1 ou 2,
caractérisée en ce que
• la rangée de trous (17) est disposée de façon régulière et est mise dans la face antérieure (16) des traverses (11, 12) et
• les alésages filetés (24, 24'; 34, 34') sont rangés dans le côté latéral des branches de fixation (32, 32'; 38, 38').

4. Armoire de branchement selon la revendication 3,
caractérisée en ce que
la distance entre deux trous voisins (17') de la rangée de trous (17) correspond de façon alternée à une fois et à deux fois une mesure R

5. Armoire de branchement selon la revendication 4,
caractérisée en ce que
la distance entre les alésages filetés (34, 34') des premières branches de fixation (32, 32') correspond au double du réseau de la mesure (R).

6. Armoire de branchement selon la revendication 4 ou 5,
caractérisée en ce que
la distance entre les alésages filetés (24, 24') des secondes branches de fixation (32, 32') présente un écartement correspondant au réseau de la mesure (R).

7. Armoire de branchement selon l'une des revendications 1 à 6,
caractérisée en ce que
les premières branches de fixation (32, 32') comprennent respectivement des faces latérales (35, 35'; 36, 36'), se trouvant dans un plan (E, E'), qui reposent sur les faces intérieures des parois latérales (14) d'une traverse (11, 12).

8. Armoire de branchement selon la revendication 7,
caractérisée en ce que
les faces (22, 22'; 23, 23') des secondes branches de fixation (38, 38'), qui s'étendent perpendiculairement aux plans (E, E'), reposent sur les faces intérieures des parois latérales (14) des traverses (11, 12).

9. Armoire de branchement selon la revendication 8,
caractérisée en ce que
la distance verticale entre les faces latérales (36, 39; 36', 39') tournées les unes vers les autres des premières et des secondes branches de fixation (32, 32'; 38, 38') est choisie de telle sorte que la paroi latérale (14) de l'une des traverses (11, 12) qui constitue un montant (29), paroi latérale (14) qui s'étend entre les faces latérales (36, 39; 36', 39') des premières et des secondes branches de fixation (32, 32'; 38, 38'), repose sur les faces latérales (36, 39; 36', 39').

10. Armoire de branchement selon la revendication 8 ou 9,
caractérisée en ce que
la distance entre les faces latérales (22', 23), tournées l'une vers l'autre, des secondes branches de fixation (38, 38') dépasse d'environ 3 mm le double de l'épaisseur de matière des parois latérales (14) des traverses (11, 12) qui forment des entretoises (29).

11. Armoire de branchement selon l'une des revendications 1 à 10,
caractérisée en ce que
au moins deux éléments de liaison (20), situés respectivement à une certaine distance l'un de l'autre, qui sont prévus sur des traverses (11, 12) se faisant vis à vis, respectivement voisines d'une paroi du boîtier de l'armoire, comprennent des branches de montage (21) qui coopèrent avec le boîtier de l'armoire.

12. Armoire de branchement selon la revendication 11,
caractérisée en ce que
les branches de montage (21) sont prévues au moins sur ceux des éléments de liaison (20) qui relient les unes aux autres les entretoises (29') qui forment la fermeture supérieure ou la fermeture inférieure du support d'appareils (29'), aux montants (28')qui forment les limites latérale du support des appareils.

13. Armoire de branchement selon la revendication 11 ou 12,
caractérisée en ce que
les branches de montage (21) sont formées sur les éléments de liaison (20) en s'étendant à peu près, mais de préférence exactement de façon parallèle aux branches de fixation ((32, 32'; 38, 38').

14. Armoire de branchement selon la revendication 13,
caractérisée en ce qu'
on prévoit sur le boîtier de l'armoire le long des parois latérales des profilés de support profonds (3) qui s'étendent à peu près horizontalement, et qui coopèrent avec les branches de montage (21) des éléments de liaison (20).

15. Armoire de branchement selon la revendication 14,
caractérisée en ce que
les profilés de support profonds (3) comprennent un réseau régulier de trous (5).

16. Armoire de branchement selon la revendication 15,
caractérisée en ce que
la distance, entre des trous voisins du réseau de trous (5) des profilés de support profonds (3), correspond exactement au réseau de la mesure (R).

17. Armoire de branchement selon la revendication 16,
caractérisée en ce que
chaque branche de montage (21) comprend des tétons de guidage (27) formés sur son côté (26) tourné vers le profilé de support profond, situés à une distance qui correspond à la mesure (R) ou à un multiple de celle-ci, tétons qui coopèrent avec les trous du réseau de trous (5).

18. Armoire de branchement selon la revendication 17,
caractérisée en ce que
• chaque branche de montage (21) comprend deux tétons de guidage (27), dont l'écartement correspond au double de la mesure (R) et
• il est prévu au milieu entre les tétons de guidage (27) un alésage fileté (28), dans lequel on peut visser une vis de fixation qui passe à travers le trou correspondant du réseau de trous (5).

19. Armoire de branchement selon l'une des revendications 1 à 18,
caractérisée en ce que
les traverses (11, 12) et les éléments de liaison (20, 20) sont fabriqués en des matières qui conduisent l'électricité.

20. Armoire de branchement selon l'une des revendications 1 à 19,
caractérisée en ce que
les parois latérales (14) des traverses (11, 12) présentent des rangées de trous (31), qui s'étendent dans le sens de la longueur.

21. Armoire de branchement selon l'une des revendications 1 à 20,
caractérisée en ce que
au moins les traverses verticales présentent à une extrémité un repère qui sert à compenser les tolérances.

22. Armoire de branchement (100) selon l'une des revendications 1 à 21,
caractérisée en ce qu'
• on peut monter sur la face antérieure du support d'appareils qui est tournée vers les éléments de branchement, des supports de capots (50) réalisés en une matière électriquement isolante qui s'écartent à peu près perpendiculairement du plan formé par le côté antérieur (16),
• on prévoit des supports d'appareils (10) situés entre les capots (40) qui recouvrent des appareils électriques de branchement, en une matière électriquement isolante, qui sont soutenus par les supports (50) de capots,
• on prévoit des vis à fermeture rapide (60),
• qu'on fait passer dans les sièges de vis (41) usinés dans les capots (40), et qui sont réalisées en une matière plastique électriquement isolante pour ancrer à volonté les capots (40) sur les supports de capots (50), une vis à fermeture rapide (60) ayant une tige allongée (63), à l'une des extrémités de laquelle est formée une tête de vis (61)qui fait saillie radialement, et vient en prise par derrière sur un capot, et sur laquelle on forme des moyens de venue en prise (70) à partir d'une partie de la tige (63) qui fait saillie hors du capot (40), moyens qui peuvent être mis à volonté en prise avec un support de capot (50), et
• on prévoit sur la vis à fermeture rapide (60) une surface d'appui (65), montée en avant de sa tête (61) et flexible, avec laquelle la vis à fermeture rapide (60) prend appui sur le capot (40).

23. Armoire de branchement selon la revendication 22,
caractérisée en ce que
la surface d'appui (65) est constituée par une collerette périphérique (64) en forme de disque, de cercle ou d'arc de cercle qui est formée sur la tige (63) à une certaine distance de la tête (61) de la vis, et dont le diamètre extérieur est plus petit ou égal à celui de la tête (61) de la vis.

24. Armoire de branchement selon la revendication 22 ou 23,
caractérisée en ce qu'
• on prévoit dans les faces frontales, tournées vers les capots (40) des supports de capots (50), des orifices (79) en forme en section transversale à peu près de trous oblongs qui communiquent respectivement avec une cavité (81), en prévoyant sur la paroi contenant l'orifice (79) de la cavité parallèlement à celle-ci des surfaces d'appui (82 et
• les moyens de venue en prise, qui sont formés sur les vis à fermeture rapide (60), comprennent un, et de préférence deux prolongements radiaux (70) opposés l'un à l'autre, formant avec l'axe longitudinal des vis à fermeture rapide un angle d'environ 90°, prolongements dont les faces orientées vers la tête de la vis à fermeture rapide sont constituées sous la forme de surfaces d'appui (71), que l'on peut monter après leur introduction dans l'orifice (79) en forme de trou oblong en section transversale, au moyen d'une rotation d'environ 90° de la vis à fermeture rapide, en arrière des surfaces d'appui (82) et bloquer ainsi la vis à fixation rapide (60) dans le sens axial.

25. Armoire de branchement selon l'une des revendications 22 à 24,
caractérisée en ce que
les prolongements radiaux (70) sont constitués sous la forme de segments de filetage, de telle sorte que la vis à fermeture rapide (60) effectue lors de la rotation à 90°, qui sert à la bloquer, une course le long de son axe longitudinal, d'une manière telle que la longueur libre de sa tige se raccourcisse.

26. Armoire de branchement selon la revendication 25,
caractérisée en ce que
la course est d'environ 1,5 mm.

27. Armoire de branchement selon l'une des revendications 22 à 26,
caractérisée en ce qu'
on prévoit dans la cavité (81) du support de capot (50) des languettes à ressort (76), qui viennent s'encliqueter dans la position de "blocage" de la vis à fermeture rapide (60) dans des contre-dépouilles (72) prévues sur celle-ci, qui s'étendent à peu près parallèlement à leur axe longitudinal (S).

28. Armoire de branchement selon l'une des revendications 22 à 27,
caractérisée en ce qu'
on forme, vu dans le sens de rotation de fixation, derrière les contre-dépouilles (72) des saillies (73) sur la vis à fermeture rapide qui viennent en butée dans la position de "blocage" sur les languettes à ressort.

29. Armoire de branchement selon l'une des revendications 22 à 28,
caractérisée en ce que
sur la face frontale du support de capot (50), qui est tournée vers le capot (40),on forme des prolongements de centrage (83) cylindriques qui entourent de façon symétrique l'orifice en forme de trou oblong (79), et qui coopèrent avec un évidement de centrage (48) d'un capot (40), prolongements de centrage (83) dont le diamètre extérieur correspond précisément au diamètre extérieur de la tête (61) d'une vis à fermeture rapide (60).

30. Armoire de branchement selon l'une des revendications 22 à 29,
caractérisée en ce que
les capots (40) sont constitués en forme de cuvette avec des parois latérales (46) qui se dressent sur la surface du fond (43) et sont les unes par rapport aux autres à peu près perpendiculaires.

31. Armoire de branchement selon la revendication 30,
caractérisée en ce que
le long des bords latéraux à l'intérieur des capots (40) en forme de cuvette on prévoit des profilés de raidissement qui relient les parois latérales adjacentes (46) les unes aux autres, profilés de raidissement dans lesquels sont usinés les sièges des vis (41).

32. Armoire de branchement selon la revendication 31,
caractérisée en ce que
aux deux extrémités des sièges de vis (41) on prévoit des élargissements cylindriques (48), qui forment des ajustages glissants avec la tête (61) d'une vis à fermeture rapide (60) ou d'un prolongement de centrage (83) d'un support de capot (50) introduit dedans.

33. Armoire de branchement selon l'une des revendications 22 à 32,
caractérisée en ce que
une vis à fermeture rapide (60) comprend sur sa tige (63) des deux côtés de la moitié de son étendue longitudinale au moins un élargissement périphérique (67) de forme à peu près annulaire, dont les faces périphériques (68) forment avec le siège de la vis (41) des ajustages de glissement, les élargissements périphériques (67) étant situés à une certaine distance les uns des autres et comprenant des zones (69) qui s'étendent en forme de cône sur le côté s'écartant de la tête de la vis (61).

34. Armoire de branchement selon la revendication 33,
caractérisée en ce qu'
on prévoit dans les sièges de vis (41) une réduction du pourtour (49) de manière axiale à peu près au milieu.

35. Armoire de branchement selon l'une des revendications 22 à 34,
caractérisée en ce que
à l'extrémité de la vis à fermeture rapide (60), qui pénètre dans un support de capot (50) on forme un prolongement de centrage cylindrique (83) qui coopère avec un alésage de centrage (85), disposé dans la paroi transversale (58) de la cavité (81) qui est en regard de l'orifice (79) en forme de trou oblong.

36. Armoire de branchement selon l'une des revendications 22 à 35,
caractérisée en ce que
la face frontale de la tête (61) de la vis à fermeture rapide (60) est équipée d'un croisillon en creux 62 de Pozi qui limite le couple de vissage que l'on peut appliquer avec un outil.

37. Armoire de branchement selon l'une des revendications 22 à 35,
caractérisée en ce que
la face frontale de la tête de la vis à fermeture rapide est équipée d'une simple fente, dans laquelle on peut enfoncer après le montage du capot correspondant un prolongement de verrouillage d'un chapeau de plombage, qui peut être fixé sur le capot au moyen d'un plombage.

38. Armoire de branchement (100) selon l'une des revendications 1 à 37,
caractérisée en ce que
• sur la face antérieure (16) du support d'appareils (10), qui est tournée vers les éléments de branchement, on peut monter des supports de capot (50) en une matière électriquement isolante qui se prolongent à peu près perpendiculairement à partir du plan formé par la face antérieure (16),
• on prévoit dans le support d'appareils (10) un agencement régulier d'orifices de fixation (18'), avec lequel on peut mettre en prise des moyens de fixation (53, 53', 55) qui sont disposés sur le côté (52) du support de capot (50), qui est tourné vers le support d'appareils,
• les supports de capot (50) sont constitués comme des supports tandem (50', 50") servant à fixer deux capots adjacents l'un à l'autre,
• les supports de capot (50) prennent appui par une paroi d'appui (52) à plat sur le support d'appareils,
• les moyens de fixation (53, 53', 55) comprennent au moins deux tenons de guidage (53, 53')à une certaine distance l'un de l'autre, et qui font saillie à partir de la paroi d'appui, lesquels tenons de guidage forment un ajustage avec les trous de fixation (18') et
• entre les tenons de guidage (53, 53') on prévoit au moins un organe de verrouillage (55) amovible qui coopère avec le support d'appareils (10), organe de verrouillage (55) qui ancre le support de capot (50) sur le support d'appareils (10).

39. Armoire de branchement selon la revendication 38,
caractérisée en ce que
le support de capot (50) comprend deux tenons de guidage (53, 53') disposés de façon symétrique par rapport à son axe médian, dont l'écartement correspond au réseau de la mesure (R).

40. Armoire de branchement selon la revendication 39,
caractérisée en ce que
la disposition régulière des orifices de fixation (18') consiste en rangées de trous (18), la distance entre deux trous voisins correspondant à la moitié du réseau de la mesure (R).

41. Armoire de branchement selon la revendication 40,
caractérisée en ce que
les trous (18') de la rangée de trous (18) présentent un diamètre plus petit que les trous (17') d'un premier réseau de trous (17) qui sont éventuellement prévus dans le support d'appareils (10)

42. Armoire de branchement selon la revendication 40 ou 41,
caractérisée en ce que
l'organe de verrouillage est une vis (55), qui repose dans un évidement transversal (54), disposé au milieu entre les tenons (53, 53'), d'une manière telle que l'axe longitudinal (T) d'une vis de fixation (55), enfoncée complètement, coïncide avec le plan médian H du support de capot (50).

43. Armoire de branchement selon la revendication 2,
caractérisée en ce que
l'on prévoit dans l'évidement transversal (54) des languettes flexibles (56), qui viennent en prise par derrière avec la vis de fixation (55).
